# EUROPEAN PATENT SPECIFICATION

(11) **EP 4 357 279 B1**
(45) Date of publication and mention of the grant of the patent: **14.01.2026**
(21) Application number: 22899617.9
(22) Date of filing: 08.11.2022
(51) Int. Cl.: B65H 19/12, B65H 19/20, B65H 19/10, B65H 19/18

(54) **ROLL REPLACEMENT DEVICE**
ROLLENWECHSELVORRICHTUNG
DISPOSITIF DE REMPLACEMENT DE ROULEAU

(30) Priority: 09.09.2022 CN 202211104194
(43) Date of publication of application: 24.04.2024
(73) Proprietor: Wuxi Lead Intelligent Equipment Co., Ltd., Wuxi, Jiangsu 214028 (CN)
(72) Inventor: CAO, Er, Wuxi Jiangsu 214028 (CN); YANG, Xiaofei, Wuxi Jiangsu 214028 (CN)
(74) Representative: Rau, Schneck & Hübner Patentanwälte Rechtsanwälte PartGmbB
(86) International application number: PCT/CN2022/130625
(87) International publication number: WO 2024/050956

(56) References cited:
- CN-A- 114 314 109
- CN-A- 114 314 109
- CN-A- 114 314 111
- CN-A- 114 314 111
- CN-A- 114 803 616
- CN-U- 218 319 751
- CN-U- 218 491 010
- CN-U- 218 507 136
- CN-U- 218 595 641
- CN-U- 218 595 657
- CN-U- 218 595 661
- CN-U- 218 707 698
- DE-A1- 102004 021 623
- JP-A- H04 153 152
- US-B2- 10 059 550

## Description

### TECHNICAL FIELD

The present disclosure relates to the field of battery manufacturing device, and specifically, to a roll replacing device.

### BACKGROUND

In the actual production process of batteries, an anode sheet material strip, a separator film material strip and a cathode sheet material strip are firstly wound in a winding mode to form a battery cell, after that, the battery cell is transported to an assembly line for assembly and finally, a cylindrical battery is formed. Since the assembly speed of the assembly line is higher than the speed of winding battery cells, the speed of winding battery cells is especially important to improve the overall production efficiency.

At present, the main factor affecting the speed of winding the battery cell is the roll-replacing of the sheet material strips, and the roll-replacing refers to that when unwinding of the working material strip on the working material roll (that is, the material roll which is unwinding and outputting the sheet material strip) is completed, it is necessary to cut off the working material strip, and then connect the working material strip with a spare material strip on a spare material roll (that is, the material roll to be used), so as to continue to unwind and output the sheet material strip downstream, therefore completing roll-replacing. A conventional roll replacing device, however, is inefficient in roll-replacing, is structurally complex, and cannot meet the production needs of increasing capacity. Documents CN 114 314 109 and CN 114 314 111 disclose similar roll replacing devices.

### SUMMARY

Based on this, it is necessary to provide a roll replacing device to address an above defect in view of problems of inefficient roll-replacing and complex structure of the roll replacing device in the prior art.

A roll replacing device, characterized by having a pickup station and an unwinding station, the roll replacing device comprising:
a conveying equipment capable of moving between the pickup station and the unwinding station and used to carry a spare material roll;
a pickup equipment used for lifting an end of a spare material strip on the spare material roll at the pickup station so that the conveying equipment fixes the lifted end of the spare material strip;
an unwinding equipment provided at the unwinding station, used for unwinding and outputting a working material strip, and capable of cutting off the working material strip and fixing a cut-off end of the working material strip; and
a tape supplying equipment capable of moving to the unwinding station, wherein the tape supplying equipment is used for supplying tape to the unwinding equipment when moving to the unwinding station;
wherein the conveying equipment is also used for transferring the spare material roll and the end of the spare material strip onto the unwinding equipment when moving to the unwinding station so that the unwinding equipment sticks the tape between the end of the spare material strip and the cut-off end of the working material strip.

In one of the embodiments, the conveying equipment comprises a base, a material-loading shaft, an adsorption assembly and a cutting assembly, the material-loading shaft, the adsorption assembly and the cutting assembly are all provided on the base, and the material-loading shaft is used for loading the spare material roll;
the base is capable of moving between the pickup station and the unwinding station; the adsorption assembly and the cutting assembly are arranged at intervals in a first direction and form a cutting passage therebetween for lifted spare material strip to pass through, and the adsorption assembly and the cutting assembly get close to or away from each other in the first direction;
when the base moves to the pickup station, the adsorption assembly and the cutting assembly get close to each other in the first direction, such that the cutting assembly cuts off passing spare material strip and the adsorption assembly adsorbs and fixes the cut-off end of the spare material strip.

In one of the embodiments, the conveying equipment further comprises a material-pushing seat connected to the base movably in an axial direction of the material-loading shaft, and the adsorption assembly is provided on the material-pushing seat;
when the base moves to the unwinding station and the material-pushing seat moves in the axial direction of the material-loading shaft, the material-pushing seat is capable of pushing the spare material roll on the material-loading shaft and the adsorption assembly which adsorbs and fixes the end of the spare material strip onto the unwinding equipment.

In one of the embodiments, the conveying equipment further comprises a first mounting seat mounted on the base, and a second mounting seat provided on the material-pushing seat movably in the first direction, the cutting assembly is provided on the first mounting seat, and the adsorption assembly is provided on the second mounting seat.

In one of the embodiments, the cutting assembly comprises a mounting member, a pressing board, a first elastic member and a first cut-off knife;
the mounting member is provided on the first mounting seat, the pressing board is provided on a side of the mounting member facing the adsorption assembly and can move close to or away from the adsorption assembly relative to the mounting member, and the first elastic member is abutted between the pressing board and the mounting member;
the first cut-off knife is provided on the mounting member, and when the pressing board is moving close to the mounting member, the first cut-off knife can penetrate from a first escape groove on the pressing board to the cutting passage and cut off the spare material strip.

In one of the embodiments, the mounting member is connected to the first mounting seat movably in the first direction.

In one of the embodiments, the adsorption assembly comprises an adsorption seat provided on the second mounting seat, and the adsorption seat has a first adsorption surface at a side facing the pressing board for adsorbing the spare material strip.

In one of the embodiments, the adsorption seat is connected to the second mounting seat movably in the first direction.

In one of the embodiments, the unwinding equipment comprises an unwinding shaft, a strip-connecting mechanism and a material-unloading mechanism; the unwinding shaft is used for loading the working material roll, and is used for unwinding and outputting the working material strip to the strip-connecting mechanism; the strip-connecting mechanism is used for receiving the tape supplied by the tape supplying equipment, and can cut off passing working material strip; and the material-unloading mechanism is used for unloading the working material roll on the unwinding shaft;

the conveying equipment when moving to the unwinding station is used for transferring the spare material roll onto the unwinding shaft, and transferring the lifted end of the spare material strip to the strip-connecting mechanism, and the strip-connecting mechanism is also used for sticking the tape between the end of the spare material strip and the cut-off end of the working material strip.

In one of the embodiments, the strip-connecting mechanism comprises a first strip-connecting assembly and a second strip-connecting assembly arranged at intervals in a first direction, which form a strip-connecting space therebetween for the working material strip to penetrate and controllably move close to or away from each other in the first direction; the first strip-connecting assembly has a first side face with a cut-off portion for cutting off the working material strip and is controllably switchable to a first state;
when the first strip-connecting assembly is in the first state, the first side face is opposite to the second strip-connecting assembly in the first direction, such that when the first strip-connecting assembly and the second strip-connecting assembly are getting close to each other, the cut-off portion is capable of pressing the working material strip against the second strip-connecting assembly and cutting off the working material strip.

In one of the embodiments, the conveying equipment is provided with an adsorption seat for adsorbing the end of the spare material strip; when the conveying equipment moves to the unwinding station, the adsorption seat adsorbing the end of the spare material strip can enter into the strip-connecting space, and adsorb the cut-off end of the working material strip located in the strip-connecting space;
the first strip-connecting assembly also has a second side face for adsorbing the tape and is also controllably switchable to a second state; when the first strip-connecting assembly is in the second state, the second side face is opposite to the second strip-connecting assembly in the first direction, such that when the first strip-connecting assembly is moving close to the second strip-connecting assembly, the tape on the second side face can be stuck between the cut-off end of the working material strip adsorbed by the adsorption seat and the end of the spare material strip.

In one of the embodiments, the adsorption seat has a first adsorption surface for adsorbing the end of the spare material strip;
when the adsorption seat enters into the strip-connecting space, the first adsorption surface is opposite to the first strip-connecting assembly in the first direction.

In one of the embodiments, the first strip-connecting assembly comprises a first moving seat and a first gluing member, the first gluing member is rotatably connected to the first moving seat, and the first moving seat is used for driving the first gluing member to move in the first direction; two side faces of the first gluing member are respectively used as the first side face and the second side face;
when the first gluing member is being rotated relative to the first moving seat, the first side face and the second side face can alternately be opposite to the second strip-connecting assembly in the first direction.

In one of the embodiments, the cut-off portion comprises a pressing member, a second cut-off knife, and a second elastic member, the pressing member is provided on the first side face of the first gluing member and can get close to or away from the first side face; the second elastic member abuts between the first gluing member and the pressing member, and the second cut-off knife is connected to the first side face of the first gluing member, such that when the pressing member is getting close to the first gluing member, the second cut-off knife can penetrate from a third escape groove on the pressing member to the strip-connecting space and cut off the working material strip.

In one of the embodiments, the second strip-connecting assembly has a third side face, and a fourth side face, the fourth side face is used for sticking the tape, and the second strip-connecting assembly is controllably switchable between a third state and a fourth state;
when the second strip-connecting assembly is in the third state, the third side face is opposite to the first side face in the first direction;
when the second strip-connecting assembly is in the fourth state, the fourth side face is opposite to the second side face in the first direction, such that when the second strip-connecting assembly is getting close to the first strip-connecting assembly, the tape on the fourth side face can be stuck to the cut-off end of the working material strip on the second side face, and to the end of the spare material strip.

In one of the embodiments, the second strip-connecting assembly comprises a second moving seat and a second gluing member, the second gluing member is rotatably connected to the second moving seat, and the second moving seat is used for driving the second gluing member to move in the first direction; two side faces of the second gluing member are respectively used as the third side face and the fourth side face;
when the second gluing member is being rotated relative to the second moving seat, the third side face and the fourth side face can alternately be opposite to the first strip-connecting assembly in the first direction.

In one of the embodiments, the pickup equipment comprises a pickup mechanism, the pickup mechanism comprises a sixth moving seat, a blowing assembly and a holding assembly, and both the blowing assembly and the holding assembly are provided on the sixth moving seat;
the sixth moving seat is movable between a spare material roll on the conveying equipment and a traction position;
when the sixth moving seat moves to the spare material roll on the conveying equipment, the blowing assembly can blow up a starting end of a material strip of the spare material roll, and the holding assembly can hold the blown up starting end of the material strip; when the sixth moving seat moves to the traction position, the holding assembly tows out the spare material strip on the spare material roll for the conveying equipment so as to cut off the spare material strip at a cutting position between the spare material roll and the traction position.

In one of the embodiments, the pickup mechanism further comprises a detection assembly mounted on the sixth moving seat, and the blowing assembly is mounted on the detection assembly;
when the sixth moving seat is moving from the traction position toward the spare material roll, the detection assembly is used for detecting whether the blowing assembly abuts against the spare material roll on the conveying equipment or not.

In one of the embodiments, the pickup equipment further comprises a scrap-collecting mechanism, the scrap-collecting mechanism comprises a fifth moving seat and a material-winding shaft, one end of the material-winding shaft is provided on the fifth moving seat, the material-winding shaft is rotatable about its axis relative to the fifth moving seat, the material-winding shaft has a material-forking groove extending in an axial direction, and the material-forking groove penetrates through one end of the material-winding shaft away from the fifth moving seat;
the fifth moving seat is movable in a third predetermined direction to drive the material-winding shaft to arrive at or depart from the winding position, and the winding position is located between the traction position and the cutting position;
when the fifth moving seat is driving the material-winding shaft to move toward the winding position, the spare material strip towed out by the holding assembly can enter into the material-forking groove.

In one of the embodiments, the scrap-collecting mechanism further comprises a material-peeling assembly arranged corresponding to the winding position, and the material-peeling assembly comprises a material-peeling actuator and a material-peeling member mounted at a driving end of the material-peeling actuator;
when the material-winding shaft is in the winding position, the material-peeling actuator is capable of driving the material-peeling member to be inserted from one end of the material-forking groove close to the fifth moving seat.

In one of the embodiments, the roll replacing device further comprises a material-preparing equipment, the material-preparing equipment comprises a material-preparing mechanism arranged corresponding to the pickup station, and the material-preparing mechanism comprises a fixed seat, a material-preparing shaft, a first clamping assembly and a second clamping assembly;
the material-preparing shaft has a connecting end and a material-loading end as its axial ends, and the material-preparing shaft is connected to the fixed seat via the connecting end; the first clamping assembly is mounted on the fixed seat to clamp or loosen a loading tube sleeved on the material-preparing shaft at the connecting end, and the loading tube is used for loading with a plurality of spare material rolls; the second clamping assembly is movable relative to the fixed seat in an axial direction of the material-preparing shaft, so as to push the spare material roll loaded on the loading tube onto the conveying equipment from the material-loading end.

**In** one of the embodiments, the material-preparing equipment further comprises a material-loading mechanism with a loading shaft, and the loading shaft is used for sleeving the loading tube loaded with the plurality of spare material rolls;
when the material-loading mechanism moves to the pickup station, the loading shaft is axially docked with the material-loading end of the material-preparing shaft, and the second clamping assembly is also used for clamping the loading tube on the loading shaft and driving the loading tube to move towards the connecting end.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a schematic structural diagram of a roll replacing device in an embodiment of the present application;
FIG. 2 is a schematic structural diagram of a conveying equipment of the roll replacing device shown in FIG. 1;
FIG. 3 is a side view of the conveying equipment shown in FIG. 2;
FIG. 4 is a top view of the conveying equipment shown in FIG. 2;
FIG. 5 is a schematic structural diagram of an unwinding equipment of the roll replacing device shown in FIG. 1;
FIG. 6 is a side view of the unwinding equipment shown in FIG. 5;
FIG. 7 is a top view of a strip-connecting mechanism of the unwinding equipment shown in FIG. 5 (a first strip-connecting assembly is in a first state, and a second strip-connecting assembly is in a third state);
FIG. 8 is a front view of the strip-connecting mechanism of the unwinding equipment shown in FIG. 5 (the first strip-connecting assembly is in a second state, and the second strip-connecting assembly is in a fourth state);
FIG. 9 is a schematic structural diagram of a tape supplying equipment of the roll replacing device shown in FIG. 1;
FIG. 10 is a side view of the tape supplying equipment shown in FIG. 9.
FIG. 11 is a top view of the tape supplying equipment shown in FIG. 9.
FIG. 12 is a schematic structural diagram of a pickup equipment and a material-preparing mechanism of the roll replacing device shown in FIG. 1;
FIG. 13 is a side view of the pickup equipment and the material-preparing mechanism shown in FIG. 12;
FIG. 14 is a schematic diagram of a starting end of a material strip of a spare material roll in an embodiment of the present application;
FIG. 15 is a schematic structural diagram of a pickup mechanism of the pickup equipment shown in FIG. 12;
FIG. 16 is a side view of the pickup mechanism shown in FIG. 15;
FIG. 17 is a schematic diagram of a scrap-collecting mechanism and a material-preparing mechanism in an embodiment of the present application;
FIG. 18 is a side view of the scrap-collecting mechanism and the material-preparing mechanism shown in FIG. 17.

### DETAILED DESCRIPTION

The technical solutions in the embodiments of the present application will be clearly and completely described below in conjunction with the accompanying drawings in the embodiments of the present application. Obviously, the described embodiments are only a part of the embodiments of the present application, and not all of them. Based on the embodiments in the present application, all other embodiments obtained by a person of ordinary skill in the art without making creative labor fall within the scope of protection of the present application as defined within the appended claims.

In addition, terms "first" and "second" are only used for descriptive purposes, and should not be understood as indicating or implying relative importance or implying a number of indicated technical features. So a feature limited with "first", "second" may expressly or implicitly include at least one of that feature. In the description of the present application, "plurality" means at least two, such as two, three, etc., unless expressly and specifically defined otherwise.

In the present application, unless otherwise expressly specified and limited, terms "mounted", "be connected with", "be connected to", "fixed" and other terms should be interpreted in a broad sense, for example, it can be a fixed connection, a detachable connection, or an integrated; it can be a mechanical connection or an electrical connection; it can be a direct connection or an indirect connection through an intermediate medium; it may be connection within the two elements or an interaction relationship between the two elements, unless explicitly defined otherwise. For those of ordinary skill in the art, the specific meanings of the above terms in the present application can be understood according to specific situations.

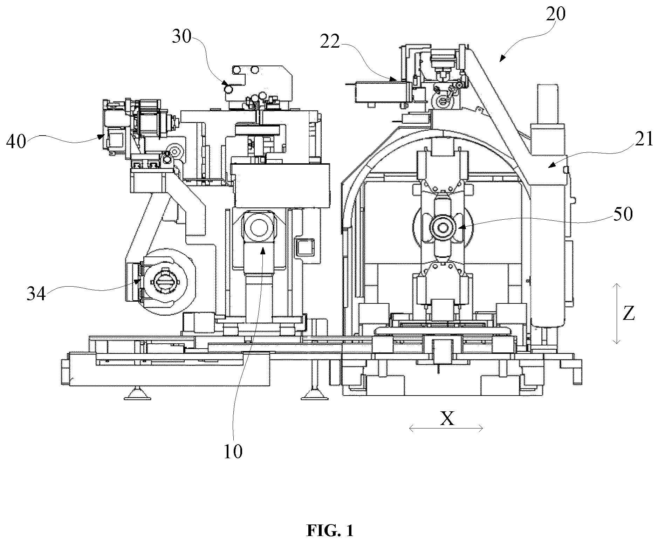

Referring to FIG. 1, an embodiment of the present application provides a roll replacing device comprising a pickup station and an unwinding station. The roll replacing device includes a conveying equipment 10, a pickup equipment 20, an unwinding equipment 30, and a tape supplying equipment 40.

The conveying equipment 10 is capable of moving between a pickup station and an unwinding station along a first direction X. The conveying equipment 10 is used for carrying a spare material roll A. The pickup equipment 20 is used for lifting an end of a spare material strip of the spare material roll A on the conveying equipment 10 at the pickup station so that the conveying equipment 10 fixes lifted end of the spare material strip. The unwinding equipment 30 is provided at the unwinding station, is used for unwinding and outputting a working material strip, and is capable of cutting off the working material strip and fixing the cut-off end of the working material strip. The tape supplying equipment 40 is capable of moving to the unwinding station in the first direction X. The tape supplying equipment 40 when moving to the unwinding station is used for supplying tape to the unwinding equipment 30.

Wherein, the conveying equipment 10 when moving to the unwinding station is also used for transferring the spare material roll A and the end of the spare material strip together onto the unwinding equipment 30, so that the unwinding equipment 30 sticks the tape between the end of the spare material strip and the cut-off end of the working material strip, therefore achieving connection between the spare material strip and the working material strip (that is, achieving a strip-connecting).

It should be noted that the working material roll refers to a material roll that is loaded on the unwinding equipment 30 and unwinds and outputs the material roll of the working material strip downstream. The working material strip refers to a material strip that is unwound and output by the working material roll. The spare material roll A is a material roll that is conveyed by the conveying equipment 10 and is used for replacing the material roll of the working material roll (that is, replacing the working material roll with the spare material roll when unwinding of the working material roll is completed). The spare material strip refers to a material strip that is unwound and output by the spare material roll A.

As for the roll replacing device described above, during the actual roll-replacing operation, first, the tape supplying equipment 40 moves to the unwinding station and supplies a tape to the unwinding equipment 30. The conveying equipment 10 is loaded with the spare material roll A and moves to the pickup station, and the pick equipment 20 lifts the end of the spare material strip of the spare material roll A on the conveying equipment 10, so that the conveying equipment 10 fixes lifted end of the spare material strip, which keeps the end of the spare material strip in a state that facilitates subsequent connection with the cut-off end of the working material strip (e.g., the vertical state shown in FIG. 1).

When the working material roll on the unwinding equipment 30 runs out, the unwinding equipment 30 stops unwinding, cuts off the working material strip, and fixes the cut-off end of the working material strip. The unwinding equipment 30 winds the working material strip connected with the working material roll (that is, the remaining working material strip located between the cutting position and the working material roll after the working material strip being cut off) onto the working material roll, and unloads the working material roll on the unwinding equipment 30. Then, the conveying equipment 10 moves to the unwinding station (at this time, the end of the spare material strip is fixed by the conveying equipment 10 such that the end of the spare material strip is kept in a lifted state), and transfers the spare material roll A and the end of the spare material strip together onto the unwinding equipment 30, such that the end of the spare material strip docks with the cut-off end of the working material strip. Then, the unwinding equipment 30 sticks the tape between the end of the spare material strip and the cut-off end of the working material strip, so as to connect the spare material strip and the working material strip.

In this way, the above roll replacing device can complete processes such as supplying the tape to the unwinding equipment 30, lifting the spare material strip on the spare material roll A, and connecting the end of the spare material strip with the cut-off end of the working material strip and thus achieve roll-replacing, which is highly automated and is conducive to improving the efficiency of roll-replacing. And, by pasting the tape on the end of the spare material strip and the cut-off end of the working material strip with the unwinding equipment 30, the conveying equipment 10 only needs to transfer the spare material roll A and fix the lifted end of the spare material strip without operations of accepting and pasting the tape, which simplifies the movement of the conveying equipment 10, in turn greatly simplifies the structure of the conveying equipment 10, reduces the space required for the conveying equipment 10, and allows the conveying equipment 10 to move more flexibly and quickly between the pickup station and the unwinding station, thus greatly improving the response speed. Further, due to the simplified structure of the conveying equipment 10 and the reduced space required for the conveying equipment 10, it is possible to facilitate the spatial layout of other mechanisms (e.g. the pickup equipment 20, etc.), optimize the coordination of movements between the various mechanisms, and further improve production efficiency and operational stability, thus meeting the increasing production needs of production capacity.

In a specific embodiment, the tape supplying equipment 40 is mounted on the conveying equipment 10, such that the tape supplying equipment 40 moves in a first direction X along with the conveying equipment 10. When the tape supplying equipment 40 moves to the unwinding equipment 30 along with the conveying equipment 10, the tape supplying equipment 40 supplies tape to the unwinding equipment 30. In this way, the tape supplying equipment 40 and the conveying equipment 10 move together, thereby avoiding the need for two sets of power mechanisms and further simplifying the structure of the device.

It should be noted that during transportation and handling of the spare material roll A, the starting section of the spare material strip on spare material roll A is prone to collision, oxidation, moisture or being clamped, resulting in the poor quality of the starting section of the spare material strip on the spare material roll A, i.e., it becomes a scrap section. And, the starting section of the spare material strip on the spare material roll A is also provided with a label, which can use a QR code to mark the information of the roll material. Therefore, the scrap section needs to be cut off when in use. In actual production, the scrap section loaded to the spare material roll A on the conveying equipment 10 may have been removed in the previous process, in which case the starting section of the spare material roll A on the conveying equipment 10 is not a scrap section. Of course, the scrap section loaded to the spare material roll A on the conveying equipment 10 may not be removed, in which case the starting section of the spare material roll A on the conveying equipment 10 is a scrap section.

When the starting section of the spare material roll A on the conveying equipment 10 is not a scrap section, the end of the spare material strip herein refers to the beginning of the material strip of the spare material strip, so at this time, what needs is only to lift the end of the spare material strip and fix it. When the starting section of the spare material strip is the scrap section, it is necessary to lift the scrap section on the spare material roll A at the pickup station and cut off it, and fix the cut-off end of the spare material strip whose scrap section has been cut off. Therefore, the end of the spare material strip herein refers to the cut-off end generated on the spare material strip after the scrap section is cut off.

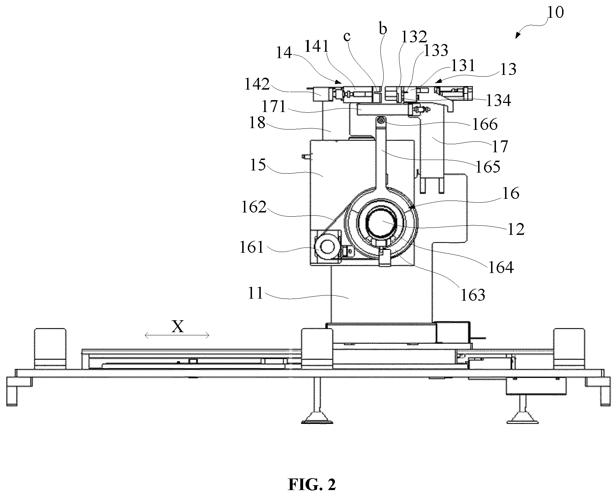

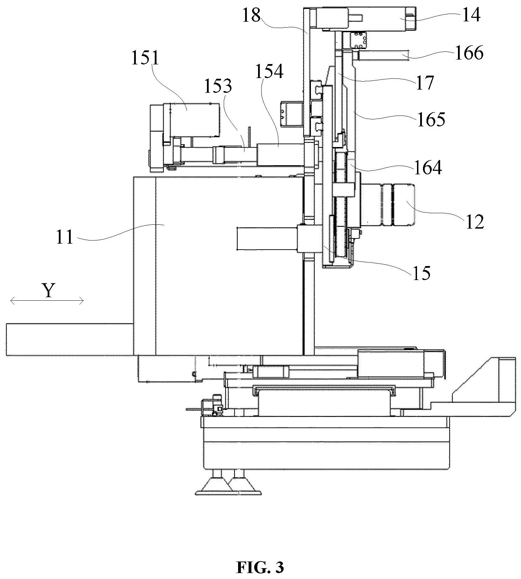

Please refer to FIGS. 2-4, in the embodiment of the present application, the conveying equipment 10 includes a base 11 and a material-loading shaft 12, an adsorption assembly 14, and a cutting assembly 13 all provided on the base 11. The base 11 is capable of moving between the above pickup station and the unwinding station in the first direction X, thereby enabling the conveying equipment 10 to move between the pickup station and the unwinding station. The material-loading shaft 12 is used for loading the spare material roll A. The adsorption assembly 14 and the cutting assembly 13 are arranged at intervals in the first direction X, and a cutting passage d through which the lifted spare material strip passes is formed between the adsorption assembly 14 and the cutting assembly 13. The adsorption assembly 14 and the cutting assembly 13 may be controllably moved toward or away from each other. When the base 11 moves to the pickup station, the adsorption assembly 14 and the cutting assembly 13 get close to each other in the first direction X to clamp the spare material strip passing through the cutting passage d, so that the cutting assembly 13 cuts off the spare material strip, and the adsorption assembly 14 adsorbs and fixes the end of the cut spare material strip.

Thus, when it is necessary to lift the spare material strip of the spare material roll A, first, the base 11 moves to the pickup station and the pickup equipment 20 lifts the spare material strip of the spare material roll A on the material-loading shaft 12, so that the lifted spare material strip passes through the cutting passage d between the adsorption assembly 14 and the cutting assembly 13. Then, the adsorption assembly 14 and the cutting assembly 13 get close to each other until the passing spare material strip is cut off, and the adsorption assembly 14 adsorbs and fixes the end of the cut spare material strip. In this way, on the one hand, it is possible to achieve the purpose of lifting the spare material strip and fixing the end of the spare material strip; and on the other hand, it is possible to achieve the purpose of cutting off the starting section of the spare material strip (the starting section of the spare material strip is the scrap section).

It should be noted that, with the adsorption assembly 14 and the cutting assembly 13 getting close to each other to clamp the passing spare material strip, it is possible to cut off the spare material strip while adsorbing and fixing the end of the spare material strip without additionally providing a cut-off mechanism for cutting off the clamped spare material strip, therefore further simplifying the structure of the device, saving the space required to be occupied and facilitating the spatial layout.

In a specific embodiment, the conveying equipment 10 further comprises a material-pushing seat 15 which is movably connected to the base 11 in the axial direction of the material-loading shaft 12. The adsorption assembly 14 is provided on the material-pushing seat 15. When the base 11 moves to the unwinding station, the material-pushing seat 15 during its movement along the axial direction of the material-loading shaft 12 can push the spare material roll A on the material-loading shaft 12 and the end of the spare material strip adsorbed and fixed on the adsorption assembly 14 to the unwinding equipment 30, so that it is possible to transfer the spare material roll A and the end of the spare material strip together to the unwinding equipment 30, therefore facilitating the unwinding equipment 30 to connect the end of the spare material strip and the cut-off end of the working material strip with a tape. It should be noted that since the spare material roll A moves synchronously with adsorption assembly 14 under the push of material-pushing seat 15, the spare material roll A and the lifted end of the spare material strip are relatively stationary, so that the end of spare material strip keeps a lifted state, therefore facilitating interfacing with the cut-off end of the working material strip on the unwinding equipment 30.

Further, the conveying equipment 10 further includes a material-pushing driving assembly. The material-pushing driving assembly is provided on the base 11 and is in driving connection with the material-pushing seat 15, so as to drive the material-pushing seat 15 to move along the axial direction of the material-loading shaft 12.

Alternatively, the material-pushing driving assembly includes a material-pushing screw 152, a material-pushing screw-nut, and a material- pushing driver 151. The material-pushing screw 152 is rotatably connected to the base 11 around its axis, and the axial direction of the material-pushing screw 152 is parallel to that of the material-loading shaft 12. The material-pushing driver 151 is mounted on the base 11 and is in driving connection with the material-pushing screw 152, so as to drive the material-pushing screw 152 to rotate. The material-pushing screw-nut is threadedly connected to the material-pushing screw 152 and fixedly connected to the material-pushing seat 15, such that the material-pushing screw 152 when rotating can drive the material-pushing screw-nut to move along the axial direction of the material-loading shaft 12, and in turn drive the material-pushing seat 15 to move along the axial direction of the material-loading shaft 12. Alternatively, the material-pushing driver 151 may be an electric machine.

Alternatively, the base 11 is mounted with a guide bar 153 whose axial direction is parallel to that of the material-loading shaft 12. The material-pushing seat 15 is mounted with a guide sleeve 154 and the guide bar 153 slidably fits within the guide sleeve 154, such that movement of the material-pushing seat 15 with respect to the base 11 is guided by the sliding fit of the guide bar 153 with the guide sleeve 154.

In a specific embodiment, the conveying equipment 10 also includes a first mounting seat 17 and a second mounting seat 18. The first mounting seat 17 is fixedly connected to the base 11, and the cutting assembly 13 is provided on the first mounting seat 17. The second mounting seat 18 is movably connected to the material-pushing seat 15 in the first direction X. The adsorption assembly 14 is provided on the second mounting seat 18, so as to be driven to get close to or away from the cutting assembly 13 by the second mounting seat 18.

In this way, when the base 11 moves to the pickup station, the second mounting seat 18 is controlled to move in the first direction X with respect to the material-pushing seat 15 after the spare material strip of the spare material roll A on the material-loading shaft 12 is lifted by the pickup equipment 20, so as to drive the adsorption assembly 14 to get close to the cutting assembly 13 until the lifted spare material strip is adsorbed and fixed by the adsorption assembly 14 and the cutting assembly 13 cuts off the spare material strip, therefore forming the end of the spare material strip and the cut-off end of the scrap section at the cutting position (at this time, both the end of the spare material strip and the cut-off end of the scrap section are adsorbed and fixed by the adsorption assembly 14). When the base 11 moves to the unwinding station, the material-pushing seat 15 is controlled to move toward the unwinding equipment 30 along the axial direction of the material-loading shaft 12, so as to drive the spare material roll A and the adsorption assembly 14 adsorbed and fixed with the end of the spare material strip to move together toward the unwinding equipment 30 until the spare material roll A and the end of the spare material strip inter into the unwinding equipment 30, therefore facilitating applying tape between the end of the spare material strip and the cut-off end of the working material strip by the unwinding equipment 30.

Further, the conveying equipment 10 further includes a first actuator 181. The first actuator 181 is mounted on the material-pushing seat 15 and is in driving connection with the second mounting seat 18, so as to drive the second mounting seat 18 to move in the first direction X with respect to the material-pushing seat 15. Alternatively, the first actuator 181 may be a cylinder.

Further, the second mounting seat 18 is provided with a first slider, and the material-pushing seat 15 is provided with a first slide rail extending longitudinally in the first direction X. The first slider is slidably connected to the first slide rail so as to guide the movement of the second mounting seat 18 with respect to the material-pushing seat 15 in the first direction X by the movement of the first slider along the first slide rail.

It should be noted that it is not limited to the first mounting seat 17 being fixed with respect to the base 11 and the second mounting seat 18 being moved with respect to the material-pushing seat 15 in the first direction X such that the adsorption assembly 14 and the cutting assembly 13 can get close to or away from each other. In another embodiment, it is also possible that the second mounting seat 18 is fixedly connected to the material-pushing seat 15 while the first mounting seat 17 is movably connected to the base 11 in the first direction X such that by controlling movement of the first mounting seat 17 with respect to the base 11 in the first direction X, the cutting assembly 13 is driven to be close to or away from the adsorption assembly 14 so as to cut off the spare material strip as well as adsorb and fix the end of the spare material strip. Of course, in yet another embodiment, it is also possible that the first mounting seat 17 is movably connected to the base 11 in the first direction X and the second mounting seat is movably connected to the material-pushing seat 15 in the first direction X such that by controlling the first mounting seat 17 and the second mounting seat 18 to move in the first direction X at the same time, the cutting assembly 13 and the adsorption assembly 14 are driven to get close to or away from each other respectively so as to cut off the spare material strip as well as adsorb and fix the end of the spare material strip, which is not limited here.

In a specific embodiment, the cutting assembly 13 includes a mounting member 131, a pressing board 132, a first elastic member 134, and a first cut-off knife 133. The mounting member 131 is provided on the first mounting seat 17, and the pressing board 132 is provided on a side of the mounting member 131 facing the adsorption assembly 14, and can get close to or away from the adsorption assembly 14 in the first direction X with respect to the mounting member 131. The first elastic member 134 abuts between the pressing board 132 and the mounting member 131 to provide a preload that causes the pressing board 132 to have a tendency to move away from the mounting member 131. The first cut-off knife 133 is provided on the mounting member 131, and when the pressing board 132 moves closer to the mounting member 131 in the first direction X, the first cut-off knife 133 can penetrate from a first escape groove on the pressing board 132 into the cutting passage d, and cut off the passing spare material strip.

In this way, when the lifted spare material strip passes through the cutting passage d between the adsorption assembly 14 and the cutting assembly 13, the movement of the first mounting seat 17 and/or the second mounting seat 18 is controlled to drive the adsorption assembly 14 and the cutting assembly 13 gradually closer in the first direction X, thereby pressing the spare material strip between the adsorption assembly 14 and the pressing board 132. As the cutting assembly 13 and the adsorption assembly 14 continue getting close to each other, the pressing board 132 overcomes the elasticity of the first elastic member 134 and moves closer to the mounting member 131, thereby causing the first cut-off knife 133 to pass through the first escape groove on the press board 132 and cut off the spare material strip. After the spare material strip is cut off, the end of the scrap section and the end of the spare material strip are both adsorbed and fixed by the adsorption assembly 14. Alternatively, the first elastic member 134 may be a spring.

Further, the mounting member 131 is movably connected to the first mounting seat 17 in the first direction X. The cutting assembly 13 further includes a first cut-off actuator 171 mounted on the first mounting seat 17. The first cut-off actuator 171 is in driving connection with the mounting member 131, so as to drive the mounting member 131 to move close to or away from the adsorption assembly 14 in the first direction X with respect to the first mounting seat 17. Alternatively, the first cut-off actuator 171 may be a cylinder. In this way, when it is necessary to cut off the lifted spare material strip, first, the movement of the first mounting seat 17 and/or the second mounting seat 18 in the first direction X is controlled to drive the adsorption assembly 14 and the cutting assembly 13 gradually closer until the adsorption assembly 14 and the pressing board 132 of the cutting assembly 13 press the spare material strip together. Then, the first cut-off actuator 171 drives the mounting member 131 to move toward the adsorption assembly 14 in the first direction X with respect to the first mounting seat 17, and since the press board 132 is now blocked by the adsorption assembly 14 and cannot move further, the mounting member 131 drives the first cut-off knife 133 through the first escape groove on the press board 132 (the compression of the first elastic member increases now) until the spare material strip between the pressing board 132 and the adsorption assembly 14 is cut off. After the spare material strip is cut off, the cutting assembly 13 and adsorption assembly 14 move back away from each other in the first direction X, and the first mounting seat 17 and/or the second mounting seat 18 are controlled to move back in the first direction X, respectively, thereby driving the adsorption assembly 14 and the pressing board 132 of the cutting assembly 13 to separate from each other. At this time, the end of the scrap section and the end of the spare material strip are adsorbed and fixed by the adsorption assembly 14.

Further, the cutting assembly 13 further includes a guiding rod, and the mounting member 131 is opened with a guiding hole extending in the first direction X. The guiding rod is in sliding fit with the guiding hole, and one end of the guiding rod is fixedly connected to the pressing board 132, therefore guiding the movement of the pressing board 132 with respect to the mounting member 131 by the movement of the guiding rod along the guiding hole. Alternatively, the first elastic member 134 is sleeved on the guiding rod, and abuts against the mounting member 131 and the pressing board 132 at two opposite ends respectively.

In a specific embodiment, the adsorption assembly 14 includes an adsorption seat 141 provided on the second mounting seat 18. The adsorption seat 141 has a first adsorption surface b for adsorbing the spare material strip on a side facing the pressing board 132. Further, the first adsorption surface b is opened with a second escape groove c for the first cut-off knife 133 to cut into. In this way, under the driving of the first mounting seat 17 and/or the second mounting seat 18, the pressing board 132 and the first adsorption surface b of the adsorption seat 141 can compress the spare material strip together, and after the first cut-off knife 133 cuts off the spare material strip, the end of the spare material strip and the end of the cut scrap section are both adsorbed and fixed to the first adsorption seat b of the adsorption seat 141. And when the first cut-off knife 133 cuts off the spare material strip, the first cut-off knife 133 is avoided by using the second escape groove c opened on the first adsorption surface b, thereby avoiding damage to the first cut-off knife 133 due to direct contact with the adsorption seat 141. It should be noted that the second escape groove c divides the first adsorption surface b into a first sub-adsorption surface which is located on a side of the second escape groove c close to the material-loading shaft 12, and a second sub-adsorption surface which is located on a side of the second escape groove c away from the material-loading shaft 12. The first cut-off knife 133 cuts the spare material strip to form an end of the spare material strip which is adsorbed and fixed to the first sub-adsorption surface, and an end of the cut scrap section which is adsorbed and fixed to the second sub-adsorption surface at the cutting position.

Further, the adsorption seat 141 is movably connected to the second mounting seat 18 in the first direction X. The adsorption assembly 14 also includes a second cut-off actuator 142 mounted on the second mounting seat 18. The second cut-off actuator 142 is in driving connection with the adsorption seat 141, so as to drive the adsorption seat 141 to get close to or away from the mounting member 131 in the first direction X with respect to the second mounting seat 18. Alternatively, the second cut-off actuator 142 may be a cylinder.

In this way, when it is necessary to cut off the spare material strip, first, the adsorption assembly 14 and the cutting assembly 13 are driven to get close to each other by controlling the movement of the first mounting seat 17 and/or the second mounting seat 18 in the first direction X with respect to the material-pushing seat 15, until the pressing board 132 of the cutting assembly 13 presses the spare material strip on the first adsorption surface b of the adsorption seat 141. Then, the first cut-off actuator 171 drives the mounting member 131 to move toward the adsorption assembly 14 in the first direction X with respect to the first mounting seat 17, and at the same time, the second cut-off actuator 142 drives the adsorption seat 141 to move toward the cutting assembly 13 in the first direction X with respect to the second mounting seat 18, such that the first cut-off knife 133 penetrates from the first escape groove on the pressing board 132 into the second escape groove c on the first adsorption surface b, so as to cut off the spare material strip (after the spare material strip is cut off, both the end of the spare material strip and the end of the cut scrap section are adsorbed and fixed to the first adsorption surface b). After the spare material strip is cut off, the first cut-off actuator 171 drives the mounting member 131 to move back away from the adsorption assembly 14 in the first direction X with respect to the first mounting seat 17, and the second cut-off actuator 142 drives the adsorption seat 141 to move back away from the cutting assembly 13 in the first direction X with respect to the second mounting seat 18. And then, the first mounting seat 17 and/or the second mounting seat 18 are controlled to move back in the first direction X with respect to the material-pushing seat 15, such that the adsorption seat 141 of the adsorption assembly 14 is separated from the pressing board 132 of the cutting assembly 13 (at this time, the first adsorption surface b of the adsorption seat 141 adsorbs and fixes the end of the spare material strip and the end of the scrap section).

In a specific embodiment, the conveying equipment 10 further includes a straightening assembly 16, and the straightening assembly 16 includes a rotary table 164, a connecting plate 165, and a straightening roller 166. The rotary table 164 is rotatably connected to the material-pushing seat 15 about its own axis and is arranged coaxially with the material-loading shaft 12. The connecting plate 165 is fixedly connected to the rotary table 164, and the straightening roller 166 is rotatably connected to the connecting plate 165 about its own axis between the material-loading shaft 12 and the cutting passage d, for wrapping around the lifted spare material strip. In this way, by controlling the rotation of the rotary table 164, the straightening roller 166 can be driven to press against the passing spare material strip so as to adjust the spatial angle of the lifted spare material strip, such that the spare material strip between the spare material roll A and the cutting passage d is in a desired state (e.g., a vertical state) to facilitate the subsequent cutting of the spare material strip by the first cut-off knife 133 and the subsequent strip-connecting of the end of the spare material strip with the cut-off end of the working material strip.

Further, the straightening assembly 16 further includes a straightening actuator, a driving pulley 161, a driven pulley 163, and a drive belt 162. The straightening actuator is mounted on the material-pushing seat 15, the driving pulley 161 is mounted on an output shaft of the straightening actuator, and the driven pulley 163 is mounted on the rotary table 164. The drive belt 162 is sleeved between the driving pulley 161 and the driven pulley 163, so that when the straightening actuator drives the driving pulley 161 to rotate, the driving pulley 161 drives the driven pulley 163 to rotate through the drive belt 162, and the driven pulley 163 then drives the rotary table 164 to rotate and in turn drives the straightening roller 166 to adjust the spatial angle of the lifted spare material strip. Alternatively, the straightening actuator may be an electric machine.

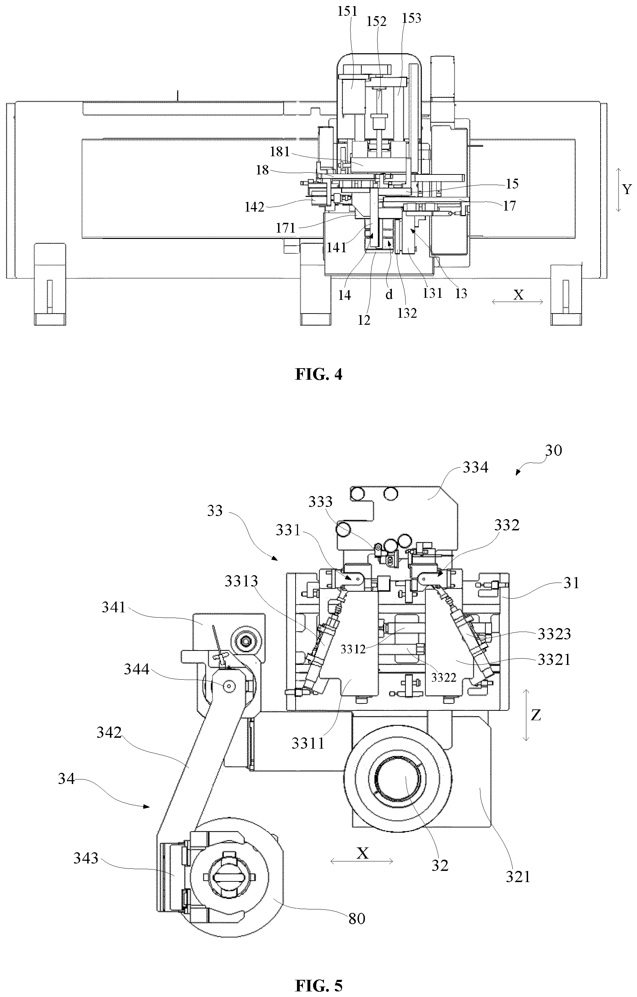

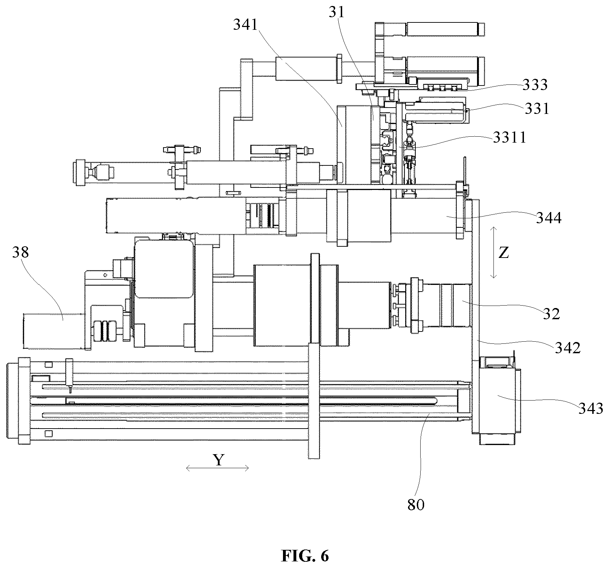

Please refer to FIGS. 5-8, in the embodiment of the present application, the unwinding equipment 30 includes an unwinding shaft 32, a strip-connecting mechanism 33, and a material-unloading mechanism 34. The unwinding shaft 32 is used to load the working material roll, and unwind and output the working material strip to the strip-connecting mechanism 33, such that the working material strip is conveyed downstream after passing through the strip-connecting mechanism 33 to convey the working material strip downstream. The strip-connecting mechanism 33 is used to receive the tape supplied by the tape supplying equipment 40 and can cut off the passing working material strip. The material-unloading mechanism 34 is used to unload the working material roll on the unwinding shaft 32.

When the conveying equipment 10 moves to the unwinding station, the spare material roll A is transferred to the unwinding shaft 32, and the lifted end of the spare material strip is transferred to the strip-connecting mechanism 33. The strip-connecting mechanism 33 is also used to stick the tape between the end of the spare material strip and the cut-off end of the working material strip, so as to realize strip-connecting.

In this way, at the pickup station, the spare material strip of the spare material roll A on the material-loading shaft 12 is lifted by the pickup equipment 20, the first cut-off knife 133 of the cutting assembly 13 cuts off the scrap section of the lifted spare material strip, and the end of the spare material strip is adsorbed and fixed to the first adsorption surface b of the adsorption seat 141. When unwinding of the working material roll on the unwinding shaft 32 is completed, first, the unwinding shaft 32 stops unwinding, and the strip-connecting mechanism 33 cuts off the passing working material strip. After the working material strip is cut off, the unwinding shaft 32 rotates in reverse to wind the remaining material strip between the unwinding shaft 32 and the cutting position of the working material strip, and the material-unloading mechanism 34 is used to unload the working material roll (at this time, the working material roll is an empty material barrel and the remaining material strip wound on the empty material barrel) on the unwinding shaft 32. Then, the conveying equipment 10 moves to the unwinding station, and pushes the spare material roll A on material-loading shaft 12 and the lifted end of the spare material strip to the strip-connecting mechanism 33 by the material-pushing seat 15, such that the strip-connecting mechanism 33 sticks the tape between the cut-off end of the working material strip and the end of the spare material strip, that is, the connection between working material strip and spare material strip is realized. Finally, the conveying equipment 10 leaves the unwinding station, and the spare material roll A on the unwinding shaft 32 is a new working material roll which continues to unwind and output the working material downstream under the driving of the unwinding shaft 32 strip.

In a specific embodiment, the conveying equipment 10 further includes a first driving mechanism in driving connection with the base 11. The first driving mechanism is used to drive the base 11 to move in the first direction X, so that the base 11 passes through the pickup station and the unwinding station. The first driving mechanism is also used for driving the base 11 to move in a second direction Y parallel to the axial direction of the material-loading shaft 12, so as to drive the material-loading shaft 12 to be axially docked with or separated from the unwinding shaft 32 of the unwinding equipment 30 at the unwinding station. In this way, when the first driving mechanism drives the base 11 to move in the second direction Y until the material-loading shaft 12 axially docks with the unwinding shaft 32, the spare material roll on the material-loading shaft 12 can be pushed to the unwinding shaft 32 using the material-pushing seat 15. Alternatively, the second direction Y is perpendicular to the first direction X.

In a specific embodiment, the strip-connecting mechanism 33 includes a first strip-connecting assembly 331 and a second strip-connecting assembly 332 both provided on the first mounting bracket 31. The first strip-connecting assembly 331 and the second strip-connecting assembly 332 are arranged at intervals in the first direction X, and form a strip-connecting space e for the working material strip to pass through. The first strip-connecting assembly 331 and the second strip-connecting assembly 332 may be controlled to move closer to or away from each other in the first direction X.

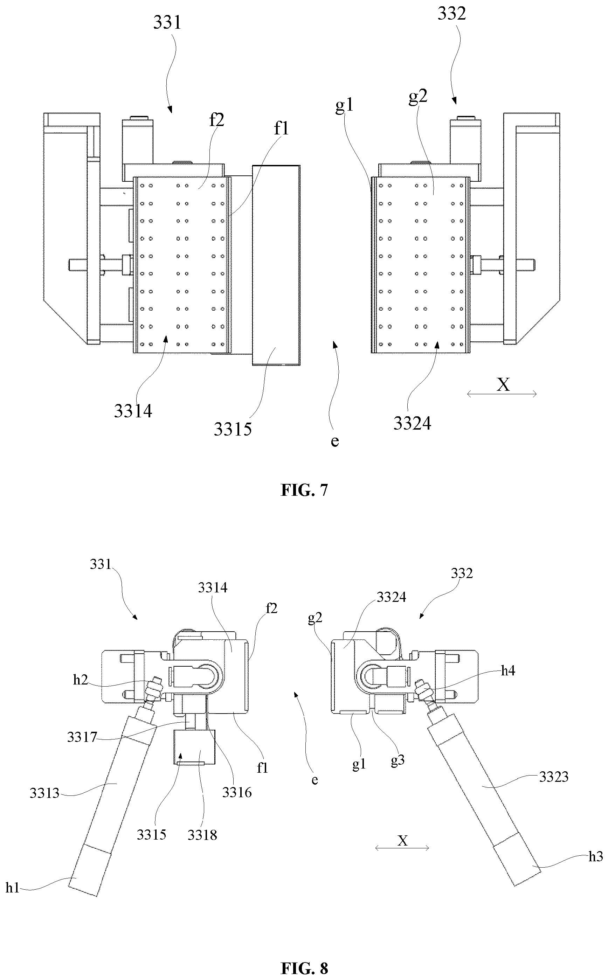

The first strip-connecting assembly 331 has a first side face f1 and a second side face f2, wherein the first side face f1 has a cut-off portion 3315 for cutting off the working material strip, and the second side face f2 is used for adsorbing the tape supplied by the tape supplying equipment 40. The first strip-connecting assembly 331 can be controllably switchable between a first state (see FIG. 7) and a second state (see FIG. 8). When the first strip-connecting assembly 331 is in the first state, the first side face f1 is opposite to the second strip-connecting assembly 332 in the first direction X, such that when the first strip-connecting assembly 331 and the second strip-connecting assembly 332 get close to each other in the first direction X, the cut-off portion 3315 on the first side face f1 can press the working material strip against the second strip-connecting assembly 332, and cut off the working material strip.

Further, when the conveying equipment 10 moves to the unwinding station, the material-pushing seat 15 pushes the adsorption seat 141 to which the end of the spare material strip is adsorbed is pushed to the strip-connecting space e, and adsorbs the cut-off end of the working material strip located in the strip-connecting space e by the first adsorption surface b of the adsorption seat 141, such that the cut-off end of the working material strip and the end of the spare material strip are adsorbed and fixed by the first adsorption surface b of the adsorption seat 141.

When the first strip-connecting assembly 331 is in the second state, the second side face f2 is opposite to the second strip-connecting assembly 332 in the first direction X, such that when the first strip-connecting assembly 331 gets close to the second strip-connecting assembly 332, it is possible to stick the tape on the second side face f2 between the cut-off end of the working material strip adsorbed and fixed by the first adsorption surface b of the adsorption seat 141, and the end of the spare material strip.

In this way, when the unwinding of the working material roll on the unwinding shaft 32 is completed, the unwinding shaft 32 stops unwinding, and the first strip-connecting assembly 331 is in the first state (i.e., the first side face f1 of the first strip-connecting assembly 331 and the second strip-connected assembly 332 are opposite to each other in the first direction X) and controls the first strip-connecting assembly 331 and the second strip-connecting assembly 332 to get close to each other in the first direction X, until the cut-off portion 3315 on the first side face f1 presses the working material strip against the second strip-connecting assembly 332 and cut off the working material strip. Then, the first strip-connecting assembly 331 and the second strip-connecting assembly are away from each other in the first direction X. Then, the conveying equipment 10 moves to the unwinding station, pushes the spare material roll A on the material-loading shaft 12 to the unwinding shaft 32 with the material-pushing seat 15, and pushes the adsorption seat 141 to which the end of the spare material strip is adsorbed to the strip-connecting space e, such that the adsorption seat 141 adsorbs and fixes the cut-off end of the working material strip onto the first adsorption surface b, that is, now both the cut-off end of the working material strip and the cut-off end of the spare material strip are adsorbed and fixed onto the first adsorption surface b. at this time, the first strip-connecting assembly 331 is switched to a second state, such that the second side face f2 of the first strip-connecting assembly 331 and the first adsorption surface b of the adsorption seat 141 entering into the strip-connecting space e are opposite to each other in the first direction X. Then, the first strip-connecting assembly 331 is controlled to move closer to the second strip-connecting assembly 332 in the first direction X until the second side face f2 of the second strip-connecting assembly 332 abuts against the first adsorption surface b of the adsorption seat 141, such that the tape adsorbed on the second side face f2 is stuck between the cut-off end of the working material strip adsorbed on the first adsorption surface b and the end of the spare material strip, that is, the cut-off end of the working material strip and the end of the spare material strip are connected by the tape.

In a specific embodiment, the first strip-connecting assembly 331 includes a first moving seat 3311 and a first gluing member 3314. The first moving seat 3311 is movably connected to the first mounting bracket 31 in the first direction X. The first gluing member 3314 is rotatably connected to the first moving seat 3311, and when the first moving seat 3311 moves in the first direction X relative to the first mounting bracket 31, the first gluing member 3314 is driven to get close to or away from the second strip-connecting assembly 332. The two sides of the first gluing member 3314 serve as the first side face f1 and the second side face f2, respectively. During the rotation of the first gluing member 3314 relative to the first moving seat 3311, the first side face f1 and the second side face f2 can be alternately opposite to the second strip-connecting assembly 332 in the first direction X, thereby enabling switching between the first state and the second state.

Further, the first strip-connecting assembly 331 further includes a first movement-actuator 3312 provided on the first mounting bracket 31. The first movement-actuator 3312 is in driving connection with the first moving seat 3311 to drive the first moving seat 3311 to move in the first direction X, such that the first moving seat 3311 drives the first gluing member 3314 to get close to or away from the second strip-connecting assembly 332. Alternatively, the first movement-actuator 3312 may be a cylinder.

Further, the first strip-connecting assembly 331 further includes a first retractable member 3313 provided on the first moving seat 3311. The first retractable member 3313 has a first retractable end h2 which is retractable, wherein the first retractable end h2 is hinged to the first gluing member 3314. In this way, when the first retractable end h2 of the first retractable member 3313 extends and retracts, the first gluing member 3314 can be driven to rotate relative to the first moving seat 3311, such that the first gluing member 3314 can be switched between the first state and the second state. Alternatively, the first retractable member 3313 may be a cylinder.

In a specific embodiment, the cut-off portion 3315 includes a pressing member 3318, a second cut-off knife 3316, and a second elastic member 3317. The pressing member 3318 is provided on the first side face f1 of the first gluing member 3314, and can move toward or away from the first side face f1 in the first direction X. The second elastic member 3317 abuts between the first gluing member 3314 and the pressing member 3318, for providing a preload that causes the pressing member 3318 to have a tendency to get away from the first side face f1. The second cut-off knife 3316 is connected to the first side face f1 of the first gluing member 3314, such that when the pressing member 3318 moves closer to the first gluing member 3314, the second cut-off knife 3316 can penetrate from the third escape groove on the pressing member 3318 into the strip-connecting space e and cut off the working material strip. In this way, when it is necessary to cut off the working material strip, the first strip-connecting assembly 331 and the second strip-connecting assembly 332 get close to each other in the first direction X, such that the pressing member 3318 presses the working material strip against the second strip-connecting assembly 332. As the first strip-connecting assembly 331 and the second strip-connecting assembly 332 continue getting close to each other in the first direction X, the pressing member 3318 is pressed by the second strip-connecting assembly 332 to move closer to the first gluing member 3314 (at this time, the compression amount of the second elastic member 3317 increases), such that the second cut-off knife 3316 penetrates through the third escape groove on the pressing member 3318, thereby cutting off the working material strip between the pressing member 3318 and the second strip-connecting assembly 332. After the working material strip is cut off, the unwinding shaft 32 rotates to wind the remaining material strip between the empty material barrel and the second cut-off knife 3316 onto the empty material barrel, and unload the empty material barrel on the unwinding shaft 32 with the unloading assembly. The first strip-connecting assembly 331 and the second strip-connecting assembly 332 are moved away from each other, such that the pressing member 3318 is separated from the second strip-connecting assembly 332. Alternatively, the second elastic member 3317 may be a spring.

Alternatively, the cut-off portion 3315 further includes a guiding pillar which is slidably connected to the first gluing member 3314 and whose axial direction is parallel to the first direction X. The pressing member 3318 is fixedly connected to one end of the guiding pillar, so that the movement of the pressing member 3318 relative to the first gluing member 3314 is guided by the guiding pillar. Further, the second elastic member 3317 is sleeved on the guiding pillar, and abuts against the first gluing member 3314 and the pressing member 3318 at two opposite ends respectively.

In a specific embodiment, the second strip-connecting assembly 332 has a third side face g1, and a fourth side face g2 for adsorbing the tape. The second strip-connecting assembly 332 can be controllably switchable between a third state (see FIG. 7) and a fourth state (see FIG. 8).

When the second strip-connecting assembly 332 is in the third state, the third side face g1 is opposite to the first side face f1 in the first direction X, such that when the first strip-connecting assembly 331 and the second strip-connecting assembly 332 get close to each other, the third side face g1 can compress the working material strip together with the cut-off portion 3315 on the first side face f1, thereby causing the second cut-off knife 3316 of the cut-off portion 3315 to cut off the working material strip. When the second strip-connecting assembly 332 is in the fourth state, the fourth side face g2 is opposite to the second side face f2 in the first direction X, such that when the second strip-connecting assembly 332 gets close to the first strip-connecting assembly 331, it is possible to stick the tape on the fourth side face g2 onto the cut-off end of the working material strip and the end of the spare material strip located on the second side face f2, thus connecting the cut-off end of the working material strip with the end of the spare material strip.

Further, the second strip-connecting assembly 332 includes a second moving seat 3321 and a second gluing member 3324. The second moving seat 3321 is movably connected to the first mounting bracket 31 in the first direction X, and the second gluing member 3324 is rotatably connected to the second moving seat 3321. When the second moving seat 3321 moves relative to the first mounting bracket 31 in the first direction X, the second gluing member 3324 is driven to move close to or away from the first strip-connecting assembly 331. The two sides of the second gluing member 3324 serve as a third side face g1 and a fourth side face g2 respectively. When the second gluing member 3324 is rotated relative to the second moving seat 3321, the third side face g1 and the fourth side face g2 can be alternately opposite to the first strip-connecting assembly 331 in the first direction X, thereby enabling the second gluing member 3324 to switch between the third state and the fourth state.

Further, the third side face g1 of the second gluing member 3324 is opened with a fourth escape groove g3 for the second cut-off knife 3316 to cut into. That is, by using the fourth escape groove g3 to escape the second cut-off knife 3316 when it cuts off the working material strip, the second cut-off knife 3316 is prevented from being damaged due to direct contact with the second gluing member 3324. Alternatively, the surface of the third side face g1 of the second gluing member 3324 in contact with the working material strip is provided with a protection gasket which protects the working material strip from being crushed. Of course, the surface of the pressing member 3318 in contact with the working material strip may also be provided with a protection gasket to prevent the working material strip from being crushed.

Further, the second strip-connecting assembly 332 further includes a second retractable member 3323 provided on the second moving seat 3321. The second retractable member 3323 has a second retractable end h4 that is retractable, and the second retractable end h4 is hinged to the second gluing member 3324. In this way, when the second retractable end h4 of the second retractable member 3323 extends and retracts, the second gluing member 3324 can be driven to rotate relative to the second moving seat 3321, such that the second gluing member 3324 can be switched between the third state and the fourth state. Alternatively, the second retractable member 3323 may be a cylinder.

Further, the second strip-connecting assembly 332 further includes a second movement-actuator 3322 provided on the first mounting bracket 31. The second movement-actuator 3322 is in driving connection with the second moving seat 3321 so as to drive the second moving seat 3321 to move in the first direction X relative to the first mounting bracket 31, such that the second moving seat 3321 drives the second gluing member 3324 to get close to or away from the first strip-connecting assembly 331 in the first direction X. Alternatively, the second movement-actuator 3322 may be a cylinder.

Further, the first mounting bracket 31 is provided with a second slide rail extending longitudinally in the first direction X, the first moving seat 3311 is provided with a second slider slidably connected to the second slide rail, and the second moving seat 3321 is provided with a third slider slidably connected to the second slide rail. In this way, the movement of the first moving seat 3311 relative to the first mounting bracket 31 in the first direction X is guided by the movement of the second slider along the second slide rail. Movement of the second moving seat 3321 in the first direction X relative to the first mounting bracket 31 is guided by the movement of the third slider along the second slide rail.

In a specific embodiment, the strip-connecting mechanism 33 further includes a strip-sucking assembly provided on the second mounting bracket 334. The strip-sucking assembly has a strip-sucking portion 333, and the strip-sucking portion 333 is used for sucking the cut-off end of the working material strip in the strip-connecting space e, and is controllably movable to depart from or arrive at the strip-connecting space e so as to bring the cut-off end of the working material strip to depart from or arrive at the strip-connecting space e. In this way, after the second cut-off knife 3316 cuts off the working material strip, the strip-sucking portion 333 moves to the strip-connecting space e to suck the cut-off end of the working material strip, and then leaves the strip-connecting space e with the cut-off end of the working material strip. It is possible to prevent the cutting end of the working material strip from randomly shaking on the one hand, and to avoid the movement of the adsorption seat 141 into the strip-connecting space e on the other hand.

Alternatively, the strip-sucking portion 333 may be a sucker. The strip-sucking portion 333 may swing to and from the strip-connecting space e. Of course, in other embodiments, the strip-sucking portion 333 may also arrive at or depart from the strip-connecting space e in a linear movement, which is not limited herein.

Further, when the material-pushing seat 15 brings the adsorption seat 141 into the strip-connecting space e, the first adsorption surface b of the adsorption seat 141 faces the first strip-connecting assembly 331, such that the second side face f2 of the first strip-connecting assembly 331 (at this time, the first strip-connecting assembly 331 is in the second state) is opposite to the first adsorption surface b of the adsorption seat 141 in the first direction X. Besides, when the strip-sucking portion 333 arrives at the strip-connecting space e with the cut-off end of the working material strip, the adsorption seat 141 can suck the cut-off end of the working material strip. Further, when the first strip-connecting assembly 331 gets close to the adsorption seat 141 in the first direction X, it is possible to stick the tape on the second side face f2 onto the cut-off end of the working material strip and the end of the spare material strip on the first adsorption surface b.

In a specific embodiment, the unwinding equipment 30 further includes a third mounting bracket 321, and an unwinding-driving mechanism 38 provided on the third mounting bracket 321. The unwinding-driving mechanism 38 is in driving connection with the unwinding shaft 32 for driving the unwinding shaft 32 to rotate. The unwinding shaft 32 when rotating drives the working material roll on it to rotate, so as to unwind and output the working material strip. Of course, the unwinding-driving mechanism 38 may also drive the unwinding shaft 32 to rotate reversely during strip-connecting, so as to wind the remaining material strip of the cut the working material strip connected with the working material roll onto the working material roll. It should be noted that, the unwinding-driving mechanism 38 may adopt a more mature prior art, which is not limited herein.

In a specific embodiment, the material-unloading mechanism 34 includes a third moving seat 341, an oscillating arm 342, and a jaw assembly 343. One end of the oscillating arm 342 is rotatably connected to the third moving seat 341, and the jaw assembly 343 is provided at the other end of the oscillating arm 342. The third moving seat 341 is used for driving the oscillating arm 342 and the jaw assembly 343 on the oscillating arm 342 to move in the axial direction of the unwinding shaft 32. The jaw assembly 343 when arriving at the unwinding shaft 32 by following the movement of the oscillating arm 342 is used to clamp the working material roll on the unwinding shaft 32. Alternatively, the cylinder may be used to drive the third moving seat 341 to move in the axial direction of the unwinding shaft 32. The oscillating arm 342 is mounted on the third moving seat 341 via the oscillating shaft 344, which is driven to rotate by an electric machine so as to drive the oscillating arm 342 to oscillate.

In this way, when it is necessary to unload the working material roll on the unwinding shaft 32, first, the oscillating arm 342 is controlled to oscillate relative to the third moving seat 341 until the jaw assembly 343 is driven to arrive at the unwinding shaft 32. Then, the third moving seat 341 moves in the axial direction of the unwinding shaft 32 until the jaw assembly 343 is driven to move to the working material roll on the unwinding shaft 32 in the axial direction of the unwinding shaft 32. And then, the jaw assembly 343 clamps the working material roll, and is driven by the third moving seat 341 to return in the axial direction of the unwinding shaft 32 until the empty material barrel is pulled away from the unwinding shaft 32. Finally, the oscillating arm 342 is controlled to oscillate relative to the third moving seat 341 and return to an initial position, so as to bring the jaw assembly 343 clamping the working material roll back to the initial position and release the working material roll.

It should be noted that, the material-unloading mechanism 34 drives the jaw assembly 343 to arrive at or depart from the unwinding shaft 32 by swinging the oscillating arm 342, so as to unload the working material roll on the unwinding shaft 32. Therefore, there is no need for providing the material-unloading mechanism 34 on the conveying equipment 10 for realizing the movement, thereby further simplifying the structure of the conveying equipment 10 and facilitating improving operation efficiency of the conveying equipment 10.

Further, the unwinding equipment 30 further includes an empty material barrel collecting mechanism 80 for receiving the empty material barrel released by the jaw assembly 343.

It should be noted that the roll replacing device further includes a mounting baseplate (not shown), and the first mounting bracket 31, the second mounting bracket 334 and the third mounting bracket 321 are all fixedly connected to the mounting baseplate. The third moving seat 341 is movably connected to the mounting baseplate in the axial direction of the unwinding shaft 32. For example, the third moving seat 341 is mounted on the mounting baseplate by the slide rail-slider assembly.

The strip-connecting process is described below. When the unwinding of the working material roll is completed, the unwinding shaft 32 stops unwinding, the first strip-connecting assembly 331 is in the first state, and the second strip-connecting assembly 332 is in the third state, that is, the pressing member 3318 is opposite to the third side face g1 of the second gluing member 3324 in the first direction X. Then, the first moving seat 3311 and the second moving seat 3321 are controlled to drive the first gluing member 3314 and the second gluing member 3324 to get close to each other in the first direction X, such that the pressing member 3318 and the third side face g1 of the second gluing member 3324 jointly compress and fix the passing working material strip. As the first gluing member 3314 and the second gluing members 3324 continue getting close to each other in the first direction X, the first gluing member 3314 drives the second cut-off knife 3316 to penetrate from the third escape groove on the pressing member 3318 until entering into the fourth escape groove g3, thereby cutting off the working material strip. And then, the unwinding shaft 32 is controlled to drive the working material roll to rotate, so as to wind the remaining material strip between the working material roll and the second cut-off knife 3316 onto the working material roll and unload the working material roll on the unwinding shaft 32 with the unloading assembly. The strip-sucking portion 333 is controlled to move to the strip-connecting space e, so as to suck the cut-off end of the working material strip. The first moving seat 3311 and the second moving seat 3321 are controlled to drive the first gluing member 3314 and the second gluing member 3324 to move away from each other in the first direction X, such that the pressing member 3318 is separated from the second gluing member 3324. The strip-sucking portion 333 is controlled to move away from the strip-connecting space e, such that the cut-off end of the working material strip departs from the strip-connecting space e along with the strip-sucking portion 333.

And then, the conveying equipment 10 moves to the unwinding station, and pushes the spare material roll A on the material-loading shaft 12 to the unwinding shaft 32 by using the material-pushing seat 15 while pushing the adsorption seat 141 (the end of the spare material strip is adsorbed and fixed on the first adsorption surface b of the adsorption seat 141 at this time) to the strip-connecting space e (i.e. between the first strip-connecting assembly 331 and the second strip-connecting assembly 332). At this time, the first adsorption surface b of the adsorption seat 141 faces the first strip-connecting assembly 331. And then, the strip-sucking portion 333 is controlled to move to the strip-connecting space e, such that the cut-off end of the working material strip arrives at the first adsorption surface b of the adsorption seat 141 so as to be adsorbed and fixed by the first adsorption surface b of the adsorption seat 141. At this time, both the cut-off end of the working material strip and the end of the spare material strip are adsorbed and fixed on the first adsorption surface b. After the cut-off end of the working material strip is adsorbed by the first adsorption surface b, the strip-sucking portion 333 stops sucking the cut-off end of the working material strip and moves away from the strip-connecting space e.

And then, the first strip-connecting assembly 331 is in the second state, so that the second side face f2 of the first gluing member 3314 (at this time, the second side face f2 is adsorbed and fixed with the tape supplied by the tape supplying equipment 40) is opposite to the first adsorption surface b of the adsorption seat 141 in the first direction X, and the first moving seat 3311 is controlled to drive the first gluing member 3314 to get close to the adsorption seat 141 in the first direction X until the second side face f2 of the first gluing member 3314 abuts against the first adsorption surface b of the adsorption seat 141, such that the tape on the second side face f2 is stuck between the cut-off end of the working material strip and the end of the spare material strip. And then, the first adsorption surface b of the adsorption seat 141 stops adsorbing the cut-off end of the working material strip and the end of the spare material strip, and the material-pushing seat 15 drive the adsorption seat 141 to exit the strip-connecting space e. At this time, the tape is stuck on the same side of the cut-off end of the working material strip and the end of the spare material strip, and the tape is adsorbed and fixed on the second side face f2 of the first gluing member 3314.

And then, the second strip-connecting assembly 332 is in the fourth state, such that the fourth side face g2 of the second gluing member 3324 (the fourth side face g2 adsorbs the tape supplied by the tape supplying equipment 40) is opposite to the second side face f2 of the first gluing member 3314 in the first direction X. The first moving seat 3311 and the second moving seat 3321 are controlled to drive the first gluing member 3314 and the second gluing member 3324 get close to each other in the first direction X until the first gluing member 3314 abuts against the second gluing member 3324, such that the tape on the fourth side face g2 of the second gluing member 3324 is stuck between the cut-off end of the working material strip and the end of the spare material strip. At this time, both the cut-off end of the working material strip and the end of the spare material strip are stuck with the tape, such that the connection between the cut-off end of the working material strip and the end of the spare material strip is more reliable. Finally, the second side face f2 of the first gluing member 3314 stops adsorbing the tape thereon, and the fourth side face g2 of the second gluing member 3324 also stops adsorbing the tape thereon. The first moving seat 3311 and the second moving seat 3321 are controlled to drive the first gluing member 3314 and the second gluing member 3324 to move away from each other in the first direction X until returning to the initial position. At this time, the spare material roll A on the unwinding shaft 32 is switched to the working material roll, and unwinds and outputs the working material strip downstream. It should be noted that the action sequence of each component in the strip-connecting process is not limited to this as long as the cut-off end of the working material strip and the end of the spare material strip can be connected, which is not limited herein.

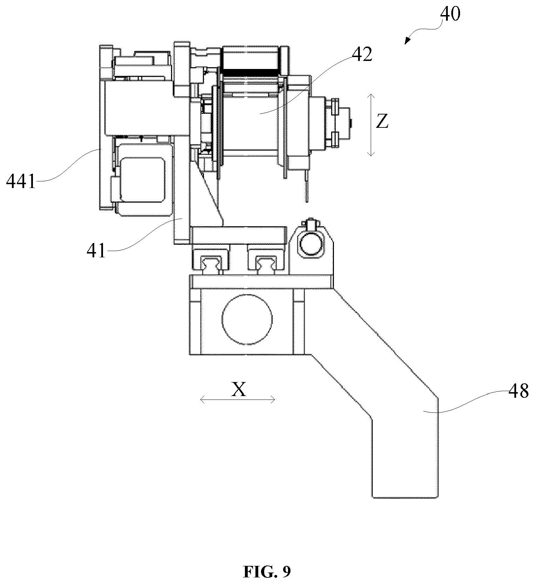

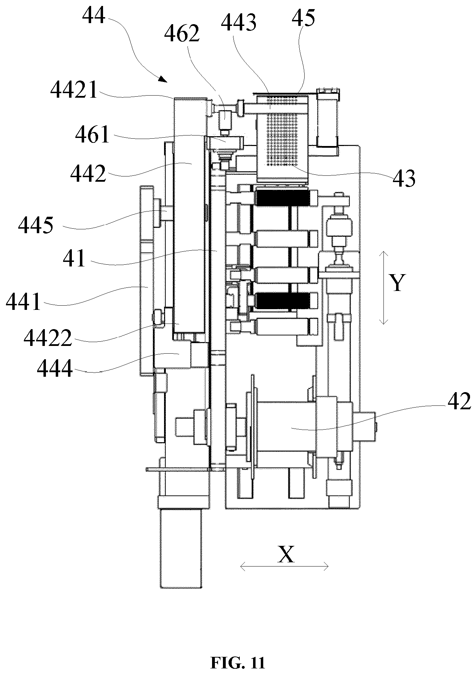

Referring to FIGS. 9 to 11, in the embodiment of the present application, the tape supplying equipment 40 includes a support frame 41, a tape-unwinding mechanism 42 provided on the support frame 41, a tape-sucking platform 43, a tape-pulling mechanism 44 and a tape-cutting mechanism 45. The support frame 41 is used for driving the tape supplying equipment 40 to move to the unwinding station in the first direction X. The tape-unwinding mechanism 42 is used for outputting a tape material strip. The tape-sucking platform 43 is located downstream of the tape-unwinding mechanism 42, and is used for sucking or releasing the passing tape material strip. When the support frame 41 drives the tape supplying equipment 40 to move to the unwinding station in the first direction X, the first gluing member 3314 or the second gluing member 3324 of the unwinding equipment 30 is located on the downstream side of the tape-sucking platform 43. The tape-pulling mechanism 44 is used for pulling the tape material strip on the tape-sucking platform 43 downstream to the first gluing member 3314 or the second gluing member 3324 of the unwinding equipment 30. The tape-cutting mechanism 45 is used for cutting the tape material strip between the tape-sucking platform 43 and the first gluing member 3314 or the second gluing member 3324 of the unwinding equipment 30. At this time, the part of the tape material strip located at the first gluing member 3314 or the second gluing member 3324 of the unwinding equipment 30 is the above tape.

In this way, when it is necessary to supply the tape to the first gluing member 3314 or the second gluing member 3324 of the unwinding equipment 30, first, the support frame 41 drives the tape supplying equipment 40 to move to the unwinding station in the first direction X, such that the first gluing member 3314 or the second gluing member 3324 of the unwinding equipment 30 is located on the downstream side of the tape-sucking platform 43. Then, the tape-pulling mechanism 44 picks up the tape material strip on the tape-sucking platform 43 and moves toward the first gluing member 3314 or the second gluing member 3324 of the unwinding equipment 30, thereby pulling the tape material strip to arrive at the first gluing member 3314 or the second gluing member 3324 of the unwinding equipment 30. And then, the tape-cutting mechanism 45 cuts off the tape material strip between tape-sucking platform 43 and the first gluing member 3314 or the second gluing member 3324 of the unwinding equipment 30. At this time, the part of the tape material strip located at the first gluing member 3314 or the second gluing member 3324 of the unwinding equipment 30 is the above tape. Finally, the tape-pulling mechanism 44 releases the tape onto the first gluing member 3314 or the second gluing member 3324 of the unwinding equipment 30, that is, supplying the tape to the first gluing member 3314 or the second gluing member 3324 of the unwinding equipment 30.

It should be noted that, to provide tape for both the second side face f2 of the first gluing member 3314 and the fourth side face g2 of the second gluing member 3324 of the unwinding equipment 30, when the support frame 41 drives the tape supplying equipment 40 to move to the unwinding station, first, the tape supplying equipment 40 moves in the first direction X to a position where the tape-sucking platform 43 and the first gluing member 3314 are aligned in the second direction Y, that is, the first gluing member 3314 is located on the downstream side of the tape-sucking platform 43, and at this time, the tape supplying equipment 40 can supply the tape to the second side face f2 of the first gluing member 3314. Then, the tape supplying equipment 40 moves in the first direction X to a position where the tape-sucking platform 43 and the second gluing member 3324 are aligned in the second direction Y, that is, the second gluing member 3324 is located on the downstream side of the tape-sucking platform 43, and at this time, the tape supplying equipment 40 can supply the tape to the fourth side face g2 of the second gluing member 3324. Of course, in other embodiments, the tape supplying equipment 40 may also supply the tape to the fourth side face g2 of the second gluing member 3324 first and then supply the tape to the second side face f2 of the first gluing member 3314, which is not limited herein. Since the process of supplying the tape to the second side face f2 of the first gluing member 3314 is similar to that of the fourth side face g2 of the second gluing member 3324, the tape supplying process for the second side face f2 of the first gluing member 3314 is described as an example below.

In a specific embodiment, the tape-pulling mechanism 44 includes a pickup-driving assembly and a tape-picking portion 443. The pickup-driving assembly includes a fourth moving seat 441 and a rotary rod 442. The fourth moving seat 441 is movably connected to the support frame 41 in the second direction Y perpendicular to the first direction X. The rotary rod 442 is provided on the fourth moving seat 441 and is rotatable about a pivot axis with respect to the fourth moving seat 441. The tape-picking portion 443 is provided at a first end 4421 of the rotary rod 442 for picking up or releasing the tape material strip. Alternatively, the movement in the second direction Y of the fourth moving seat 411 relative to the support frame 41 may be driven by an electric cylinder, a cylinder, a lead screw pair, or the like.

During movement in the second direction Y of the fourth moving seat 441 relative to the support frame 41, it is possible to drive the tape-picking portion 443 to move between the tape-sucking platform 43 and the first gluing member 3314 of the unwinding equipment 30. During rotation of the rotary rod 442 about the pivot axis, it is possible to drive the tape-picking portion 443 at the tape-sucking platform 43 to abut against or depart from the tape-sucking platform 43, so as to pick up the tape material strip on the tape-sucking platform 43; or it is possible to drive the tape-picking portion 443 at the first gluing member 3314 of the unwinding equipment 30 to abut against or depart from the second side face f2 of the first gluing member 3314, so as to release the tape material strip onto the second side face f2 of the first gluing member 3314. Alternatively, the second direction Y is perpendicular to the pivot axis. The pivot axis is parallel to the first direction X.

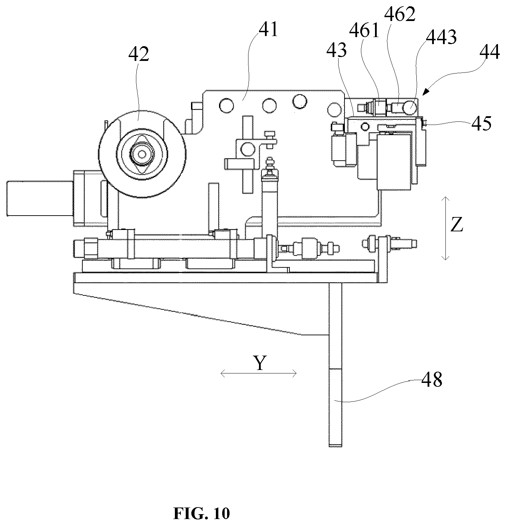

In this way, when it is necessary to supply the tape to the first gluing member 3314 of the unwinding equipment 30, first, the tape supplying equipment 40 moves to the unwinding station in the first direction X, such that the first gluing member 3314 of the unwinding equipment 30 is located on the downstream side of the tape-sucking platform 43. Then, the fourth moving seat 441 drives the tape-picking portion 443 to move to the tape-sucking platform 43 in the second direction Y, and the rotary rod 442 drives the tape-picking portion 443 (the rotary rod 442 drives the tape-picking portion 443 down in the embodiment shown in FIG. 10) to abut against the tape-sucking platform 43, so that the tape-picking portion 443 picks up the tape material strip on the tape-sucking platform 43. And then, the rotary rod 442 drives the tape-picking portion 443 (the rotary rod 442 drives the tape-picking portion 443 up in the embodiment shown in FIG. 10) to depart from the tape-picking platform 43, therefore bringing the tape material strip away from tape-sucking platform 43. And then, the fourth moving seat 441 drives the tape-picking portion 443 to move in the second direction Y onto the second side face f2 of the first gluing member 3314, such that the tape-picking portion 443 pulls the tape material strip to arrive at the second side face f2 of the first gluing member 3314. And then, the rotary rod 442 drives the tape-picking portion 443 to abut against the second side face f2 of the first gluing member 3314, such that the tape-picking portion 443 releases the tape material strip onto the second side face f2 of the first gluing member 3314. And then, the tape-sucking platform 43 adsorbs the passing tape material strip and the tape-cutting mechanism 45 cuts off the tape material strip. At this time, the portion of the tape material strip located on the second side face f2 of the first gluing member 3314 is the above tape. And then, the rotary rod 442 drives the tape-picking portion 443 to depart from the second side face f2 of the first gluing member 3314, so that the tape on the second side face f2 of the first gluing member 3314 departs from the tape-picking portion 443, that is, the tape is supplied once.

It should be noted that, in the present embodiment, the rotary rod 442 rotates to drive the tape-picking portion 443 provided at the first end 4421 of the rotary rod 442 down or up, so as to facilitate the tape-picking portion 443 to perform the action of picking up or releasing the tape and avoid the need to provide a cylinder at the tape-picking portion 443 for driving the tape-picking portion 443 down or up, therefore simplifying the structure at the tape-picking portion 443. On the one hand, it is possible to save the space occupied by the tape-picking portion 443 and in turn reduce the space needed to be occupied by supplying the tape, which is beneficial to reducing the design difficulty of the spatial arrangement of each mechanism of the unwinding equipment 30; on the other hand, it is possible to reduce the weight at the tape-picking portion 443, thereby advantageously improving the stability of the tape-picking portion 443 in completing the action of picking up or releasing the tape.

In a specific embodiment, the support frame 41 of the tape supplying equipment 40 is fixedly connected to the base 11 of the conveying equipment 10 via the connecting seat 48, such that the tape supplying equipment 40 moves in the first direction X along with the base 11 of the conveying equipment 10. The tape supplying equipment 40 can pass by the unwinding station during following the movement of the base 11 in the first direction X, such that the tape supplying equipment 40 respectively supplies the tape to the first gluing member 3314 and the second gluing member 3324 of the unwinding equipment 30 at the unwinding station.

In a specific embodiment, the pickup-driving assembly further includes a tape-taking actuator 444 provided on the fourth moving seat 441. The tape-taking actuator 444 is connected to a second end 4422 of the rotary rod 442 facing away from the tape-picking portion 443 so as to drive the rotary rod 442 to rotate about the pivot axis, thereby driving the tape-picking portion 443 down or up. In this way, the tape-picking portion 443 is mounted via the first end 4421 of the rotary rod 442, and the tape-taking actuator 444 is connected via the second end 4422 of the rotary rod 442, so as to spatially isolate the tape-taking actuator 444 from the tape-picking portion 443, thereby achieving the purpose of reducing the space occupied by the tape-picking portion 443. Alternatively, the tape-taking actuator 444 may employ a cylinder.

Further, the pivot axis is located between the first end 4421 and the second end 4422 of the rotary rod 442, such that a "lever" structure is formed by the rotary rod 442 and thus the drive tape-picking portion 443 is driven down or up more labor-saving. On the one hand, it is possible to meet the demand by a tape-taking actuator 444 with a smaller size, which is beneficial to reducing the cost and saving the space; on the other hand, it may be beneficial to improve the response speed of driving the tape-picking portion 443 down or up. More specifically, a middle portion of the rotary rod 442 is mounted on the fourth moving seat 441 through a pivoting shaft 445 such that the rotary rod 442 can rotate about the pivoting shaft 445 relative to the fourth mounting seat. The axis of the pivoting shaft 445 is the above pivot axis.

In a specific embodiment, the tape-sucking platform 43 is located on one side of the support frame 41 in the first direction X, and the pickup-driving assembly is located on the other side of the support frame 41 in the first direction X. In this way, the pickup-driving assembly and the tape-sucking platform 43 are respectively provided on opposite sides of the support frame 41 in the first direction X, therefore avoiding the interference of pickup-driving assembly on the conveying of the tape material strip, and thus improving the stability of the tape-supplying process.

In a specific embodiment, when the tape supplying equipment 40 moves to the unwinding station in the first direction X, the tape-sucking platform 43 and the first gluing member 3314 of the unwinding equipment 30 are arranged along the second direction Y, such that when the fourth moving seat 441 moves in the second direction Y, the tape-picking portion 443 can be driven to move between the tape-sucking platform 43 and the first gluing member 3314.

Further, the support frame 41 can also be controlled to drive the tape supplying equipment 40 to move in the second direction Y, such that the unwinding station drives the tape-sucking platform 43 to get close to or away from the first gluing member 3314 of the unwinding equipment 30 in the second direction Y. In this way, after the support frame 41 drives the tape supplying equipment 40 to move to the unwinding station in the first direction X, the support frame 41 drives the tape supplying equipment 40 to move close to the first gluing member 3314 of the unwinding equipment 30 in the second direction Y, such that the tape-sucking platform 43 is brought closer to the first gluing member 3314 of the unwinding equipment 30, thereby facilitating the supply of tape to the first gluing member 3314 of the unwinding equipment 30. After the tape supplying is completed, the support frame 41 drives the tape supplying equipment 40 to move away from the first gluing member 3314 of the unwinding equipment 30 in the second direction Y so as to drive the tape-sucking platform 43 away from the first gluing member 3314 of the unwinding equipment 30, therefore preventing the unwinding equipment 30 from interfering with the movement of the tape supplying equipment 40 when the support frame 41 drives the tape supplying equipment 40 to move in the first direction X. Alternatively, the support frame 41 is mounted on the connecting seat 48 through the slide rail and the slider, so as to guide movement of the support frame 41 relative to the connecting seat 48 in the second direction Y. The movement of the support frame 41 relative to the connecting seat 48 in the second direction Y may be driven by a linear actuator such as an electric cylinder or a cylinder.

In a specific embodiment, the tape-picking portion 443 is a tape-pulling roller, and the tape-pulling roller has a rotation state in which it is rotatable about its own axis and a rotation stopping state in which it is not rotatable about its own axis. When the fourth moving seat 441 drives the tape-pulling roller to move onto the tape-sucking platform 43, the tape-pulling roller is switched to the rotation state, and the fourth moving seat 441 can drive the tape-pulling roller to move upstream for a predetermined distance along the tape-sucking platform 43, so as to wind the end of the tape material strip on the tape-sucking platform 43 onto the tape-pulling roller.

When the fourth moving seat 441 drives the tape-pulling roller to move from the tape-sucking platform 43 to the first gluing member 3314 of the unwinding equipment 30, the tape-pulling roller is switched to a rotation stopping state, so as to prevent the tape material strip wound on the tape-pulling roller from falling off during pulling the tape.

When the fourth moving seat 441 drives the tape-pulling roller to move onto the second side face f2 of the first gluing member 3314, the tape-pulling roller is switched to the rotation state, and the fourth moving seat 441 can drive the tape-pulling roller to move downstream for a predetermined distance along the second side face f2 of the first gluing member 3314, so as to flatten the tape material strip wound on the tape-pulling roller onto the second side face f2 of the first gluing member 3314.

In this way, when the tape-pulling roller picks up or releases the tape material strip, the tape-pulling roller is controlled to be in the rotation state, so as to facilitate winding or flattening of the tape material strip; when the tape-pulling roller pulls the tape material strip, the tape-pulling roller is controlled to be in the rotation stopping state, so as to prevent the tape material strip from falling off the tape-pulling roller.

In a specific embodiment, the tape supplying equipment 40 further includes a rotation stopping mechanism, and the rotation stopping mechanism includes a rotation stopping actuator 461 and a rotation stopper 462. The rotation stopping actuator 461 is mounted on the fourth moving seat 441 and is in driving connection with the rotation stopper 462, so as to drive the rotation stopper 462 for rotation stopping fit with or separating from the tape-pulling roller. In this way, when the tape-pulling roller needs to be rotated, the rotation stopping actuator 461 drives the rotation stopper 462 to be separated from the tape-pulling roller, such that the rotation stopper 462 cannot prevent the tape-pulling roller from rotating. When the tape-pulling roller does not need to rotate, the rotation stopping actuator 461 drives the rotation stopper 462 for rotation stopping fit with the tape-pulling roller, such that the rotation stopper 462 can prevent the tape-pulling roller from rotating. Alternatively, the rotation stopping actuator 461 may be a cylinder.

The process of supplying tape to the second side face f2 of the first gluing member 3314 of the unwinding equipment 30 by the tape supplying equipment 40 will be described as follows. First, the tape supplying equipment 40 moves to the unwinding station in the first direction X until the tape-sucking platform 43 is aligned with the first gluing member 3314 in the second direction Y. The support frame 41 is further moved in the second direction Y to drive the tape-sucking platform 43 to get close to the first gluing member 3314. Then, the fourth moving seat 441 moves in the second direction Y to drive the tape-pulling roller to move onto the tape-sucking platform 43. And then, the rotation rod 442 drives the tape-pulling roller down to abut against the tape-sucking platform 43. And then, the fourth moving seat 441 moves in the second direction Y to drive the tape-pulling roller to roll upstream for a certain distance along the tape-sucking platform 43, so as to wind the tape material strip on the tape-sucking platform 43 onto the tape-pulling roller. And then, the rotation rod 442 drives the tape-pulling roller up, so that the tape-pulling roller drives the tape material strip to separate from the tape-sucking platform 43.

And then, the rotation stopper 462 is controlled for rotation stopping fit with the tape-pulling roller, and the fourth moving seat 44 moves in the second direction Y until the tape-pulling roller is driven to move onto the second side face f2 of the first gluing member 3314. And then, the rotation stopper 462 is controlled for rotation stopping separation from the tape-pulling roller, and the rotation rod 442 drives the tape-pulling roller down to abut against the second side face f2 of the first gluing member 3314. And then, the fourth moving seat 441 moves in the second direction Y to drive the tape-pulling roller to roll downstream for a certain distance along the second side face f2 of the first gluing member 3314, and while rolling, the second side face f2 of the first gluing member 3314 adsorbs the tape material strip on the tape-pulling roller, such that the tape material strip wound on the tape-pulling roller is gradually flattened on the second side face f2. After the tape material strip on the tape-pulling roller is completely flattened on the second side face f2, the rotation rod 442 drives the tape-pulling roller up, such that the tape-pulling roller is separated from the second side face f2 of the first gluing member 3314. At this time, the tape is adsorbed on the second side face f2, that is, supplying the tape to the second side face f2 of the first gluing member 3314 is completed.

It should be noted that, the tape supplying equipment 40 supplies the tape to the fourth side face g2 of the second tape-supplying member in a process similar to that described above, so it will not be repeated herein.

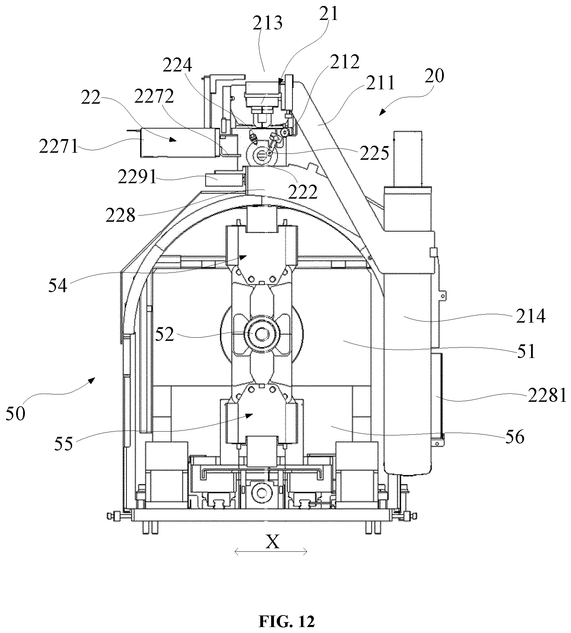

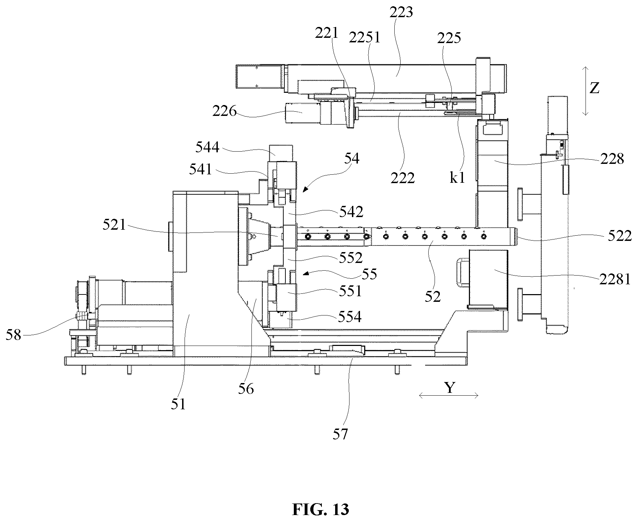

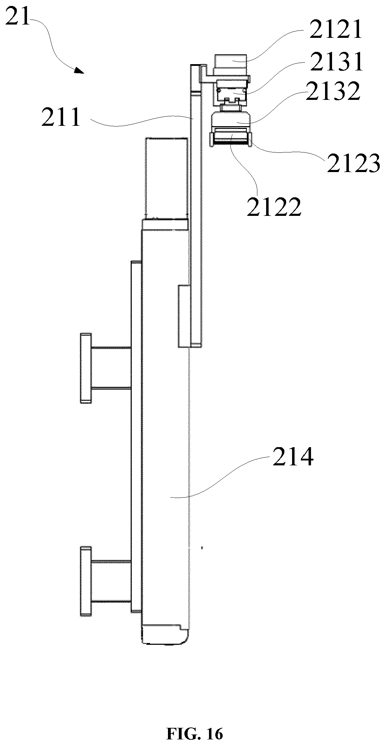

Referring to FIGS. 12 to 16, in the embodiment of the present application, the pickup equipment 20 includes a pickup mechanism 21, and the pickup mechanism 21 includes a sixth moving seat 211, and a blowing assembly 212 and a holding assembly 213 both provided on the sixth moving seat 211. The sixth moving seat 211 is movable in the third direction Z, so as to drive the blowing assembly 212 and the holding assembly 213 to move between the spare material roll A on the conveying equipment 10 and the traction position. Alternatively, the third direction Z is perpendicular to the first direction X and the second direction Y.

When the sixth moving seat 211 drives the blowing assembly 212 and the holding assembly 213 to move to the spare material roll A on the conveying equipment 10 in the third direction Z, the blowing assembly 212 can blow up a starting end a of the material strip of the spare material roll A so that the holding assembly 213 can hold the blown up starting end a of the material strip. When the sixth moving seat 211 drives the blowing assembly 212 and the holding assembly 213 to move to the traction position in the third direction Z, the holding assembly 213 tows the spare material strip on the spare material roll A for the conveying equipment 10 adsorbing, fixing and cutting off the spare material strip at the cutting position between the spare material roll A and the traction position, such that both the end of the spare material strip and the end of the cut scrap section are adsorbed and fixed by the first adsorption surface b of the adsorption seat 141 of the conveying equipment 10.

In this way, when the conveying equipment 10 moves to the pickup station and the end of the spare material strip of spare material roll A needs to be processed, first, the sixth moving seat 211 moves in the third direction Z to drive the blowing assembly 212 and the holding assembly 213 to move toward the spare material roll A on the material-loading shaft 12 until it arrives at the spare material roll A. Then, the blowing assembly 212 blows air toward the starting end a of the material strip A on the spare material roll A to blow up the starting end a of the material strip A. And then, the holding assembly 213 is used to hold the blown up starting end a of the material strip. After the starting end a of the material strip is held, the sixth moving seat 211 moves in the third direction Z to drive the blowing assembly 212 and the holding assembly 213 to move away from the spare material roll A, thereby towing out the spare material strip on the spare material roll A until the blowing assembly 212 and the holding assembly 213 arrives at the traction position. And then, the conveying equipment 10 cuts off the spare material strip by the first cut-off knife 133 at the cutting position between the spare material roll A and the traction position, and adsorbs and fixes the end of the spare material strip and the end of the cut scrap section by the first adsorption surface b of the adsorption seat 141.

It should be noted that, in order to ensure that the blowing assembly 212 can accurately blow up the starting end a of the material strip, before the blowing assembly 212 blows air, it is necessary for the conveying equipment 10 to drive the spare material roll A thereon to rotate until driving the starting end a of the material strip to be located on the side of the spare material roll A facing the blowing assembly 212 and the holding assembly 213. Alternatively, a position sensor can be used to detect the position of the label on the starting end a of the material strip, so as to determine whether the starting end a of the material strip arrives at the side of the spare material roll A facing the blowing assembly 212 and the holding assembly 213.

The pickup equipment 20 uses the blowing assembly 212 to blow up the starting end a of the material strip of the spare material roll A, and uses the holding assembly 213 to hold the starting end a of the material strip and tow out the spare material strip, such that after the conveying equipment 10 cuts off the scrap section of the spare material strip, both the end of the spare material strip and the end of the scrap section are adsorbed and fixed on the first adsorption surface b of the adsorption seat 141, and in turn the end of the spare material strip is lifted up and kept in a state convenient for strip-connecting with the cut-off end of the working material strip, which does not need to manually process the end of the spare material strip of the spare material roll A, thereby improving the automation degree of the roll replacing device, reducing the labor cost, and improving the production efficiency and the stability of production quality.

It should be noted that, the starting end a of the material strip on the spare material roll A is often adsorbed by means of vacuum adsorption in the prior art, which, however, has problems of poor adsorption stability and large energy consumption for maintaining vacuum. In contrast, in the present embodiment, the starting end a of the material strip on the spare material roll A is first blown up by the blowing assembly 212, and then the holding assembly 213 is used to hold the starting end a of the material strip and tows out the spare material strip, such that the conveying equipment 10 can lift up the spare material strip and fix the end of the spare material strip so as to avoid the need of maintaining vacuum for a long time and thus reduce energy consumption, and it is stable and reliable to fix the starting end a of the material strip by clamping.

It should also be noted that the above traction position refers to a position where the holding assembly 213 then moves a certain distance away from the spare material roll A in the third direction Z and arrives after the holding assembly 213 holds the starting end a of the material strip at the spare material roll A. The distance between the traction position and the spare material roll A is not limited herein, as long as it is ensured that the scrap section on the spare material roll A is completely towed out when the holding assembly 213 moves to the traction position and the end of the spare material strip can be fixed by the conveying equipment 10 after the scrap section is cut off.

In a specific embodiment, the pickup mechanism 21 further includes a detection assembly 2121 mounted on the sixth moving seat 211, and the blowing assembly 212 is mounted on the detection assembly 2121. In the process that the sixth moving seat 211 drives the blowing assembly 212 and the holding assembly 213 to move from the traction position toward the spare material roll A on the conveying equipment 10, the detection assembly 2121 is used for detecting whether the blowing assembly 212 abuts against the spare material roll A on the conveying equipment 10. Further, when the detection assembly 2121 detects that the blowing assembly 212 abuts against the spare material roll A, the sixth moving seat 211 is controlled to stop moving, therefore avoiding the spare material roll A from being crushed. At this time, the blowing assembly 212 may then be used to blow up the starting end a of the material strip on the spare material roll A, and then the holding assembly 213 is used to hold the blown up starting end a of the material strip.

Alternatively, the detection assembly 2121 includes a cylinder and a magnetic switch provided on the cylinder. The blowing assembly 212 is mounted at a driving end of the cylinder. When the sixth moving seat 211 drives the blowing assembly 212 to move from the traction position toward the spare material roll A on the conveying equipment 10, the driving end of the cylinder is in an extended state. When the blowing assembly 212 abuts against the spare material roll A, the driving end of the cylinder is compressed and contracted. When the magnetic switch detects that the driving end of the cylinder is compressed and contracted, the sixth moving seat 211 is controlled by a control equipment, such as an industrial computer, to stop the movement, therefore preventing the spare material roll A from being crushed.

Further, the blowing equipment includes a blowing member 2122 and a compacting wheel 2123. The blowing member 2122 is mounted on the driving end of the cylinder of the detection assembly 2121, and the compacting wheel 2123 is rotatably connected to the blowing member 2122 around its own axis. When the sixth moving seat 211 drives the blowing assembly 212 to move from the traction position toward the spare material roll A on the conveying equipment 10, it is possible to drive the compacting wheel 2123 to abut against the spare material roll A on the material-loading shaft 12. When the detection assembly 2121 detects that the compacting wheel 2123 abuts against the spare material roll A, the sixth moving seat 211 stops moving. In this way, the compacting wheel 2123 is brought into contact with the spare material roll A. The blowing member 2122 is in direct contact with the spare material roll a to avoid damage to the spare material roll A. With the compacting wheel 2123 in abutment with the spare material roll A, it helps to avoid damage to the spare material roll A caused by direct contact between the blowing member 2122 and the spare material roll A.

It should be noted that, providing the detection assembly 2121 ensures that each time the end of the spare material strip of the spare material roll A is processed, the blowing member 2122 further blows air to the starting end a of the material strip on the spare material roll A after the compacting wheel 2123 abuts against the spare material roll A, such that it is possible to ensure that the starting end a of the material strip can be blown up accurately, which facilitates the adaptation of the spare material roll A with different roll diameters and increases the compatibility of the device.

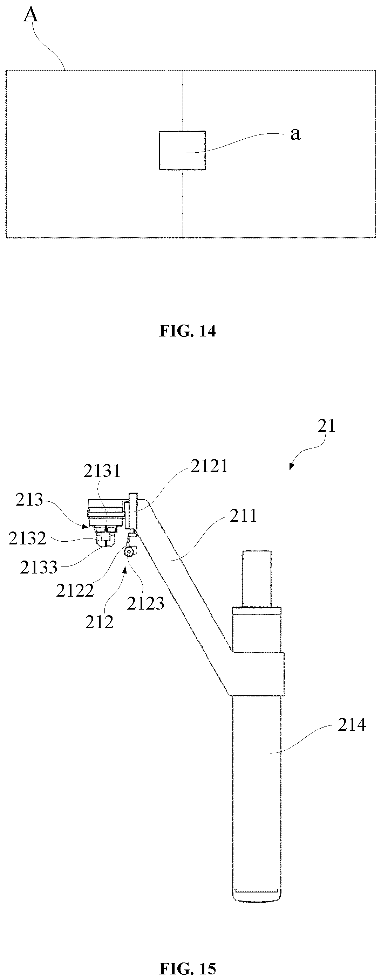

Further, the number of the compacting wheels 2123 is two, and the two compacting wheels 2123 are located at the two ends of the blowing member 2122 in the first predetermined direction, which is parallel to the axial direction of the spare material roll A. In this way, by abutting against the spare material roll A with the two compacting wheels 2123, the position between the spare material roll A and the blowing member 2122 is more stable and reliable, therefore ensuring that the blowing member 2122 is able to accurately blow up the starting end a of the material strip onto the holding assembly 213. It will be appreciated that the axial direction of the spare material roll A is parallel to the axial direction of the material-loading shaft 12. Specifically, in the embodiment shown in FIG. 15, the first predetermined direction is a direction perpendicular to the paper surface.

Further, the blowing member 2122 has a blowing slit for blowing air toward the starting end a of the material strip, and the blowing slit extends lengthwise in the first predetermined direction, which is beneficial to ensure that the starting end a of the material strip on the spare material roll A is blown up.

In a specific embodiment, the holding assembly 213 includes a holding actuator 2131, and a first fixture block 2132 and a second fixture block 2133 provided at the driving end of the holding actuator 2131. A holding space is formed between the first fixture block 2132 and the second fixture block 2133 for the blown up starting end a of the material strip to enter. The holding actuator 2131 is used for driving the first fixture block 2132 and the second fixture block 2133 to get close to or away from each other, thereby holding or loosening the starting end a of the material strip entering into the holding space. In this way, by blowing up the starting end a of the material strip on the spare material roll A into the clamping space with the blowing member 2122, it is possible to hold the blown up starting end a of the material strip when the holding actuator 2131 drives the first fixture block 2132 and the second fixture block 2133 to get close to each other. Alternatively, the holding actuator 2131 may be a claw cylinder.

Alternatively, the first fixture block 2132 and the second fixture block 2133 are arranged along a second predetermined direction, which is perpendicular to the axial direction of the spare material roll A on the conveying equipment 10. In this way, when the starting end a of the material strip blown up by the blowing member 2122 enters into the holding space between the first fixture block 2132 and the second fixture block 2133, the first fixture block 2132 and the second fixture block 2133 are respectively located at two sides in the thickness direction of the starting end a of the material strip, such that the first fixture block 2132 and the second fixture block 2133 hold the starting end a of the material strip in the thickness direction of the starting end a of the material strip, therefore ensuring the starting end a of the material strip to be held firmly and reliably. In the embodiment shown in FIG. 15, the second predetermined direction is perpendicular to the left-right direction.

In a specific embodiment, the pickup mechanism 21 further includes a pickup actuator 214. The pickup actuator 214 is in driving connection with the sixth moving seat 211 for driving the sixth moving seat 211 to move in the third direction Z, so as to drive the blowing assembly 212 and the holding assembly 213 to move to the spare material strip A or the traction position. Alternatively, the pickup actuator 214 may employ an electric cylinder.

It should be noted that the above detection assembly 2121 is communicated to the pickup actuator 214 by means of a control equipment such as an industrial computer, such that the control equipment can control the pickup actuator 214 to stop driving the sixth moving seat 211 to continue moving toward the spare material roll A according to the detection result of the detection assembly 2121.

In some embodiments, the holding assembly 213 holds the starting end a of the material strip on the spare material roll A, and moves to the traction position under the driving of the sixth moving seat 211 so as to tow out the spare material strip on the spare material roll A, such that the spare material strip passes by the cutting position and the winding position between the spare material roll A and the traction position. The cutting position is located between the spare material roll A and the winding position. The spare material strip between the cutting position and the traction position is the scrap section. The first cut-off knife 133 of the conveying equipment 10 cuts off the spare material strip by the cutting position, that is, cutting off the scrap section. It should be noted that after the first cut-off knife 133 cuts off the scrap section, the end of the scrap section is adsorbed and fixed by the first adsorption surface b of the adsorption seat 141, and the starting end a of the material strip of the scrap section is held and fixed by the holding assembly 213.

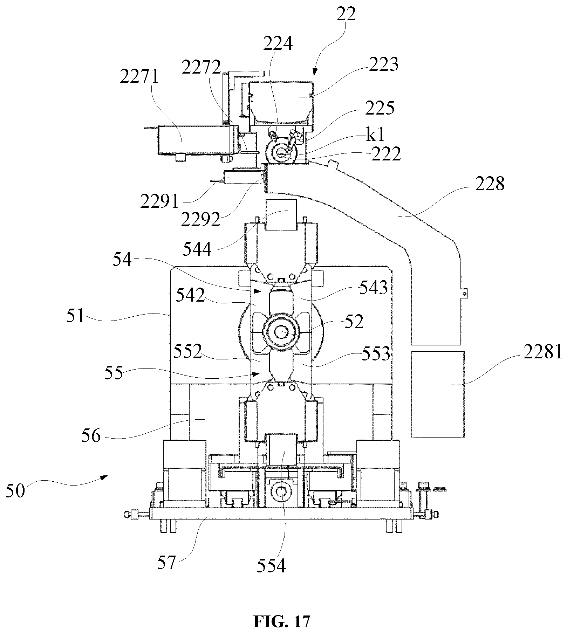

As shown in FIGS. 17-18, the pickup equipment 20 further includes a scrap-collecting mechanism 22. The scrap-collecting mechanism 22 is used for winding the scrap section of the spare material strip passing by the winding position, so that the holding assembly 213 can hold the starting end a of the material strip of the next spare material roll A again.

Specifically, the scrap-collecting mechanism 22 includes a fifth moving seat 221 and a material-winding shaft 222. One end of the material-winding shaft 222 is provided on the fifth moving seat 221, and the material-winding shaft 222 is rotatable around its own axis relative to the fifth moving seat 221. The material-winding shaft 222 has an axially extending material-forking groove k1 for the scrap section to pass through, such that the scrap section can be wound on the material-winding shaft 222 when the material-winding shaft 222 rotates around its own axis.

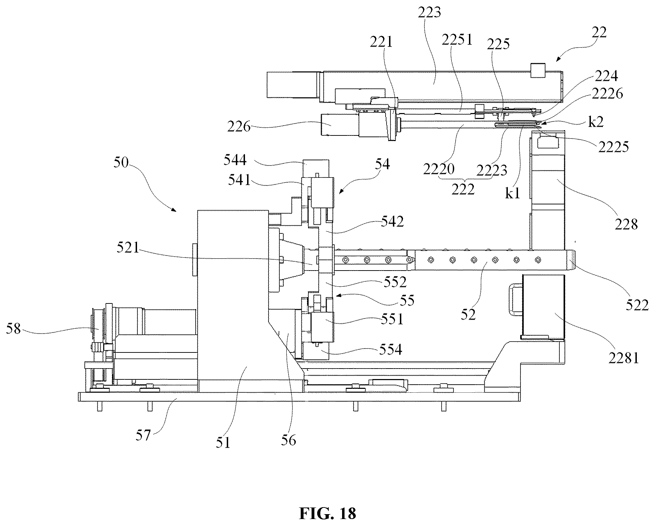

Further, the material-forking groove k1 passes through one end of the material-winding shaft 222 away from the fifth moving seat 221, that is, the end of the material-winding shaft 222 away from the fifth moving seat 221 is an open end k2, such that the scrap section can enter into the material-forking groove k1 from the open end k2. The fifth moving seat 221 can be controlled to move in a third predetermined direction (i.e., left and right direction in FIG. 18) to drive the material-winding shaft 222 to arrive at or depart from the winding position. When the fifth moving seat 221 drives the material-winding shaft 222 to arrive at the winding position, the scrap section of the spare material strip enters into the material-forking groove k1 from the open end k2. Alternatively, the axial direction of the material-winding shaft 222 is parallel to the axial direction of the material-loading shaft 12 and also parallel to the third predetermined direction, such that the scrap section of the spare material strip can enter into the material-forking groove k1.

In this way, when the holding assembly 213 moves from the spare material roll A to the traction position and tows out the scrap section of the spare material strip, it is necessary to wind the scrap section. First, the fifth moving seat 221 moves to the winding position in the third predetermined direction, such that the scrap section passing by the winding position enters into the material-forking groove k1 from the open end k2 of the material-winding shaft 222. Then, the holding assembly 213 loosens the starting end a of the material strip of the scrap section and controls the material-winding shaft 222 to rotate, such that the scrap section is gradually wound on the material-winding shaft 222, that is, the scrap section is automatically collected, which improves the automation degree of the roll replacing device, increases the production efficiency and the stability of the production quality, and reduces the labor cost.

In a specific embodiment, the material-winding shaft 2222 includes a main segment 2220 and a winding segment 2223 arranged along its axial direction. One end of the main segment 2220 is provided on the fifth moving seat 221, so that the material-winding shaft 2222 can rotate around its own axis relative to the fifth moving seat 221. The winding segment 2223 includes a first half-shaft 2225 and a second half-shaft 2226. Both the first half-shaft 2225 and the second half-shaft 2226 are connected to the other end of the main segment 2220, and are arranged at intervals in the radial direction of the main segment 2220, such that the above material-forking groove k1 is formed between the first half-shaft 2225 and the second half-shaft 2226, and the first half-shaft 2225 and the end of the second half-shaft 2226 away from the main segment 2220 form the above open end k2, and such that when the fifth moving seat 221 drives the material-winding shaft 2222 to move toward the winding position in the third predetermined direction, the scrap section passing by the winding position gradually enters into the material-forking groove k1 between the first half-shaft 2225 and the second half-shaft 2226, such that the scrap section can be wound when the material-winding shaft 2222 is rotated.

Alternatively, a surface on the side of the first half-shaft 2225 away from the second half-shaft 2226 is a first arc surface, and a surface on the side of the second half-shaft 2226 away from the first half-shaft 2225 is a second arc surface, such that the first arc surface of the first half-shaft 2225 and the second arc surface of the second half-shaft 2226 are combined to form a generally cylindrical outer profile. Specifically, both the first arc surface and the second arc surface are circle arc surface and are located on the same cylindrical surface, so that the first arc surface and the second arc surface are combined to form a cylindrical outer profile.

Further, the scrap-collecting mechanism 22 further includes a rotation actuator 226 which is mounted on the fifth moving seat 221 and is in driving connection with the material-winding shaft 2222 to drive the material-winding shaft 2222 to rotate. Alternatively, the rotation actuator 226 may be an electric machine.

Further, the scrap-collecting mechanism 22 further includes a translation actuator 223, which is in driving connection with the fifth moving seat 221 so as to drive the fifth driving seat to move in the third preset direction. Alternatively, the translation actuator 223 may be an electric cylinder.

In a specific embodiment, the scrap-collecting mechanism 22 further includes a material-peeling assembly arranged corresponding to the winding position. The material-peeling assembly includes a material-peeling actuator 2271 and a material-peeling member 2272. The material-peeling member 2272 is mounted at the driving end of the material-peeling actuator 2271. When the material-winding shaft 2222 is in the winding position, the material-peeling actuator 2271 can drive the material-peeling member 2272 to be inserted from the end of the material-forking groove k1 close to the fifth moving seat 221, such that when the fifth moving seat 221 drives the material-winding shaft 2222 to depart from the winding position, the material-peeling member 2272 peels off the scrap section wound on the material-winding shaft 2222, that is, the scrap section is peeled off from the material-winding shaft 2222, so that the material-winding shaft 2222 winds the scrap section again. In this way, after the material-winding shaft 2222 finishes winding of the scrap section at the winding position, first, the material-peeling actuator 2271 drives the material-peeling member 2272 to be inserted from the end of the material-forking groove k1 close to the fifth moving seat 221. Then, the fifth moving seat 221 drives the material-winding shaft 2222 away from the winding position, and since the scrap section on the material-winding shaft 2222 is blocked by the material-peeling member 2272 from moving along with the material-winding shaft 2222, the scrap section is peeled off from the material-winding shaft 2222 by the material-peeling member 2272. Alternatively, material-peeling actuator 2271 may be a cylinder.

Further, the scrap-collecting mechanism 22 further includes a waste discharging assembly arranged corresponding to the winding position. The waste discharging assembly includes a waste discharging pipe 228 whose feed port is located below the material-peeling member 2272 so as to receive the scrap section of the material-winding shaft 2222 peeled off by the material-peeling member 2272. In this way, when the material-winding shaft 2222 finishes winding of the scrap section at the winding position, the fifth moving seat 221 drives the material-winding shaft 2222 away from the winding position after the material-peeling member 2272 is inserted into the material-forking groove k1, such that the material-peeling member 2272 peels off the scrap section on the material-winding shaft 2222. The scrap section peeled off by the material-peeling member 2272 enters into the waste discharging pipe 228 from the feed port of the waste discharging pipe 228 so as to be discharged along the waste discharging pipe 228.

Further, the waste discharging assembly further includes a material discharging actuator 2291 mounted on the waste discharging pipe 228 and a material pushing block 2292 mounted at the driving end of the material discharging actuator 2291. The waste discharging pipe 228 also has a material pushing port, and the material discharging actuator 2291 is used for driving the material pushing block 2292 to enter into the waste discharging pipe 228 from the material pushing port, so as to push the scrap section in the waste discharging pipe 228 to be discharged along the waste discharging pipe 228. Alternatively, the material discharging actuator 2291 may be a cylinder.

Further, the waste discharging assembly further includes a waste box 2281, and the waste box 2281 is arranged at the material discharging port of the waste discharging pipe 228, so as to accommodate the scrap section discharged by the material discharging port of the waste discharging pipe 228.

In a specific embodiment, the scrap-collecting mechanism 22 further includes a roll diameter detector 224 provided on the fifth moving seat 221. The roll diameter detector 224 is used to detect the roll diameter of the scrap section wound on the material-winding shaft 2222. In this way, when the roll diameter detector 224 detects that the roll diameter on the material-winding shaft 2222 reaches a preset value or is no longer increasing, it indicates that the winding of the scrap section is completed, and the material-winding shaft 2222 can be controlled to stop rotating at this time.

In a specific embodiment, the scrap-collecting mechanism 22 further includes a pressing assembly 225, and the pressing assembly 225 includes a frame 2251 and a pressing roller. The frame is connected to the fifth moving seat 221, and the pressing roller is provided on the frame for abutting against the scrap section wound on the material-winding shaft 2222. In this way, in the process of winding the scrap section by the material-winding shaft 2222, the pressing roller compacts the scrap section on the material-winding shaft 2222 to avoid loosening of the scrap section wound on the material-winding shaft 2222.

Further, the pressing assembly 225 includes an oscillating member and a third elastic member, wherein one end of the oscillating member is rotatably connected to the frame and the pressing roller is mounted on the other end of the oscillating member. The third elastic member is connected to the oscillating member and the frame for providing a preload that allows the oscillating member to drive the pressing roller elastically against the material-winding shaft 2222. In this way, the oscillating member drives the pressing roller against the material-winding shaft 2222 at all times (i.e., the pressing tube is elastically connected to the material-winding shaft 2222) under the action of the third elastic member, so that when the scrap section is wound by the material-winding shaft 2222, the scrap section is compacted on the material-winding shaft 2222 by the pressing roller, so as to avoid loosening of the scrap section on the material-winding shaft 2222. Alternatively, the above roll diameter detector 224 is also mounted on the frame, so that the roll diameter detector 224 and the pressing roller share the same frame for mounting, which helps to simplify the structure.

Alternatively, one end of the oscillating member is rotatably connected to the frame through a rotating shaft. The third elastic member is a torsional spring sleeved on the rotating shaft, wherein one torque arm of the torsional spring abuts with the frame and the other torque arm of the torsional spring abuts with the oscillating member, such that the oscillating member drives the pressing roller to abut against the material-winding shaft 2222 at all times under the action of the torsional spring.

Referring to FIGS. 17-18, in the embodiment of the present application, the roll replacing device further includes a material-preparing equipment which is used for providing the spare material roll A to the material-loading shaft 12 of the conveying equipment 10 moved to the pickup station. The material-preparing equipment includes a material-preparing mechanism 50 which includes a fixed seat 51, a material-preparing shaft 52, a first clamping assembly 54, and a second clamping assembly 55.

The material-preparing shaft 52 has a connecting end 521 and a material-loading end 522 as its axial ends. The material-preparing shaft 52 is connected to the fixed seat 51 through the connecting end 521. The first clamping assembly 54 is mounted on the fixed seat 51 to clamp or loosen the loading tube sleeved on the material-preparing shaft 52 at the connecting end 521. A plurality of spare material rolls A are loaded on the loading tube. The second clamping assembly 55 is movable relative to the fixed seat 51 in the axial direction of the material-preparing shaft 52, so as to push the spare material roll A on the loading tube from the material-loading end 522 onto the material-loading shaft 12 of the conveying equipment 10.

In actual use, when the conveying equipment 10 moves to the pickup station, the material-loading shaft 12 of the conveying equipment 10 is axially docked with the material-loading end 522 of the material-preparing shaft 52. The second clamping assembly 55 moves for a predetermined distance toward the material-loading end 522 in the axial direction of the material-preparing shaft 52, such that the second clamping assembly 55 pushes the respective spare material roll A on the material-preparing shaft 52 toward the material-loading end 522 until the spare material roll A at the foremost end moves from the material-loading end 522 onto the material-loading shaft 12 of the conveying equipment 10. And, in the process of the second clamping assembly 55 pushing the spare material roll A, the first clamping assembly 54 clamps the loading tube at all times, such that the loading tube remains stationary relative to the material-preparing shaft 52 while each spare material roll A, pushed by the second clamping assembly 55, moves along the loading tube toward the material-loading shaft 12.

In this way, on the one hand, it is possible to automatically push the spare material roll A to the material-loading shaft 12 of the conveying equipment 10, thus avoiding manual loading to the material-loading shaft 12, reducing labor costs, improving the automation degree of the roll replacing device, and contributing to increased production efficiency; on the other hand, when it is necessary to load the material onto the material-preparing shaft 52, the loading tube may be used to load a plurality of spare material rolls A onto the material-preparing shaft 52 at one time, and may be held and fixed by the first clamping assembly 54, which prevents the loading tube from moving relative to the material-preparing shaft when loading the material to the material-loading shaft 12 and eliminates the need to load the spare material roll A to the material-preparing shaft 52 one by one, thereby greatly improving the efficiency of loading the material to the material-preparing shaft 52.

In a specific embodiment, the material-preparing equipment also includes a material-loading mechanism which has a loading shaft. The loading shaft is used for sleeving a loading tube loaded with a plurality of spare material rolls A. When the material-loading mechanism moves to a position where the loading shaft is axially docked with the material-loading end 522 of the material-preparing shaft 52, the second clamping assembly 55 moves to the loading shaft along the axial direction of the material-preparing shaft 52, clamps the loading tube on the loading shaft, and then moves back along the axial direction of the material-preparing shaft 52 until the loading tube on the loading shaft and each spare material roll A on the loading tube are moved to the material-preparing shaft 52 together and separate from that loading shaft, therefore enabling the loading tube and each spare material roll A on the loading tube to be transferred from the loading shaft to the material-preparing shaft 52. Alternatively, the material-loading mechanism may be a handling trolley. The loading tube may also be a steel tube.

In this way, with the cooperation of the material-loading mechanism and the material-preparing mechanism 50, it is possible to transfer a transfer pipe loaded with a plurality of spare material roll A to the material-preparing shaft 52 at one time, which, on the one hand, further improves the automation degree of the roll replacing device and reduces the labor cost, and on the other hand, achieves that a plurality of spare material roll A are simultaneously fed onto the material-preparing shaft 52 and thus greatly improves feeding efficiency.

In a specific embodiment, the first clamping assembly 54 includes a first clamping seat 541, a first clamping member 542, a second clamping member 543, and a first clamping actuator 544. The first clamping seat 541 is connected to the fixed seat 51, and the first clamping member 542 and the second clamping member 543 are movably connected to the first clamping seat 541. A first holding position is formed between the first clamping member 542 and the second clamping member 543 for the loading tube to enter. A first clamping actuator 544 is provided on that first clamping seat 541 and is in driving connection with the first clamping member 542 and the second clamping member 543 so as to drive the first clamping member 542 and the second clamping member 543 to get close to or away from each other, thereby realizing that the first clamping member 542 and the second clamping member 543 clamp or loosen the loading tube entering into the first holding position.

Further, the first clamping member 542 is hinged to the first clamping seat 541, and has a first transmission end and a first clamping end. The second clamping member 543 is hinged to the first clamping seat 541 and has a second transmission end and a second clamping end. The above first clamping position is formed between the first clamping end and the second clamping end. The first clamping actuator 544 is in driving connection with the first transmission end and the second transmission end to drive the first transmission end and the second transmission end to get close to or away from each other. In this way, when it is necessary to clamp the loading tube on the material-preparing shaft 52, the first clamping actuator 544 drives the first transmission end and the second transmission end away from each other, thereby driving the first clamping member 542 and the second clamping member 543 to rotate and in turn enabling the first clamping end and the second clamping end to get close to each other until the loading tube is clamped. When it is necessary to loosen the loading tube on the material-preparing shaft 52, the first clamping actuator 544 drives the first transmission end and the second transmission end to get close to each other, thereby driving the first clamping member 542 and the second clamping member 543 to rotate and in turn enabling the first clamping end and the second clamping end to depart from each other so as to loosen the loading tube.

Further, the first clamping assembly 54 further includes a first transmission structure via which the first transmission end and the second transmission end are in transmission connection with the first clamping actuator 544. The first clamping actuator 544 is used for outputting a linear motion to the first transmission structure, and the first transmission structure is used for converting the linear motion into the rotational motion of the first clamping member 542 and the second clamping member 543, thereby enabling the first clamping end and the second clamping end to get close to or away from each other.

It should be noted that, the first transmission structure may be a linkage transmission structure, a wedge transmission structure, or a cam transmission structure, as long as the first clamping member 542 and the second clamping member 543 can be driven to rotate to enable the first clamping end and the second clamping end to get close to or away from each other, which is not limited herein.

In a specific embodiment, the material-preparing mechanism 50 further includes a movement seat 56 movable relative to the fixed seat 51 in the axial direction of the material-preparing shaft 52, and the second clamping assembly 55 is mounted on the movement seat 56, such that the movement seat 56 drives the second clamping assembly 55 to move in the axial direction of the material-preparing shaft 52.

Further, the material-preparing mechanism 50 further includes a support plate 57 and a movement actuator 58, wherein the fixed seat 51 is fixedly connected to the support plate 57, and the movement seat 56 is movably connected to the support plate 57 in the axial direction of the material-preparing shaft 52. The movement actuator 58 is provided on the support plate 57 and is in driving connection with the movement seat 56, so as to drive the movement seat 56 to move in the axial direction of the material-preparing shaft 52. Alternatively, the movement actuator 58 may be a lead screw module.

Further, the support plate 57 is provided with a fourth slide rail extending longitudinally in the axial direction of the material-preparing shaft 52, and the movement seat 56 is provided with a fourth slider slidably connected to the fourth slide rail. In this way, movement of the movement seat 56 relative to the support plate 57 in the axial direction of the material-preparing shaft 52 is guide by movement of the fourth slider along the fourth slide rail.

In a specific embodiment, the second clamping assembly 55 includes a second clamping seat 551, a third clamping member 552, a fourth clamping member 553, and a second clamping actuator 554. The second clamping seat 551 is connected to the movement seat 56, and the third clamping member 552 and the fourth clamping member 553 are provided on the movement seat 56. A second clamping position is formed between the third clamping member 552 and the fourth clamping member 553 for the loading tube to enter. The second clamping actuator 554 is provided on the second clamping seat 551 and is in transmission connection with the third clamping member 552 and the fourth clamping member 553, so as to drive the third clamping member 552 and the fourth clamping member 553 to get close to or away from each other, thereby causing the third clamping member 552 and the fourth clamping member 553 to clamp or loosen the loading tube entering into the second clamping position.

Further, the third clamping member 552 is hinged to the second clamping seat 551, and has a third transmission end and a third clamping end. The fourth clamping member 553 is hinged to the second clamping seat 551 and has a fourth transmission end and a fourth clamping end. The above second clamping position is formed between the third clamping end and the fourth clamping end. The second clamping actuator 554 is in transmission connection with the third transmission end and the fourth transmission end to drive the third transmission end and the fourth transmission end to get close to or away from each other.

In this way, when it is necessary to clamp the charging tub (that is, the loading tube on the material-loading shaft needs to be loaded onto the material-preparing shaft 52), the second clamping actuator 554 drives the third transmission end and the fourth transmission end away from each other, thereby driving the third clamping member 552 and the fourth clamping member 553 to rotate and in turn enabling the third clamping end and the fourth clamping end to get close to each other until the loading tube is clamped.

When it is necessary to loosen the loading tube (that is, the spare material roll A on the loading shaft on the material-preparing shaft 52 needs to be pushed onto the material-loading shaft 12), the second clamping actuator 554 drives the third transmission end and the fourth transmission end to get close to each other, thereby driving the third clamping member 552 and the fourth clamping member 553 to rotate and in turn enabling the third clamping end and the fourth clamping end to depart from each other to loosen the loading tube. At this time, the first clamping assembly 54 clamps the loading tube on the material-preparing shaft 52, and the second clamping assembly 55 loosens the loading tube and pushes the spare material roll A on the loading tube to move until the spare material roll A is transferred to material-loading shaft 12.

Further, the second clamping assembly 55 further includes a second transmission structure via which the third transmission end and the fourth transmission end are in transmission connection with the second clamping actuator 554. The second clamping actuator 554 is used for outputting a linear motion to the second transmission structure, and the second transmission structure is used for converting the linear motion into a rotational motion of the third clamping member 552 and the fourth clamping member 553, thereby enabling the third clamping end and the fourth clamping end to get close to or away from each other.

It should be noted that, the second transmission structure may be a linkage transmission structure, a wedge transmission structure, or a cam transmission structure, as long as the third clamping member 552 and the fourth clamping member 553 can be driven to rotate to enable the third clamping end and the fourth clamping end to get close to or away from each other, which is not limited herein.

The above embodiments only express several embodiments of the present application, and the description is more specific and detailed, but it cannot be understood as a limitation on the scope of the present application. It should be noted that for those skilled in the art, several modifications and improvements can be made without departing from a concept of the present application, which belong to a protective scope of the present application as defined within the appended claims. Therefore, the protective scope of the present application shall be subject to the appended claims.

## Claims

1. A roll replacing device, **characterized by** having a pickup station and an unwinding station, the roll replacing device comprising:
a conveying equipment (10) capable of moving between the pickup station and the unwinding station and used to carry a spare material roll (A);
a pickup equipment (20) used for lifting an end of a spare material strip on the spare material roll (A) at the pickup station so that the conveying equipment (10) fixes the lifted end of the spare material strip;
an unwinding equipment (30) provided at the unwinding station, used for unwinding and outputting a working material strip, and capable of cutting off the working material strip and fixing a cut-off end of the working material strip; and
a tape supplying equipment (40) capable of moving to the unwinding station, wherein the tape supplying equipment (40) is used for supplying a tape to the unwinding equipment (30) when moving to the unwinding station;
wherein the conveying equipment (10) is further used for transferring the spare material roll (A) and the end of the spare material strip onto the unwinding equipment (30) when moving to the unwinding station, so that the unwinding equipment (30) sticks the tape between the end of the spare material strip and the cut-off end of the working material strip.

2. The roll replacing device of claim 1, **characterized in that** the conveying equipment (10) comprises a base (11), a material-loading shaft (12), an adsorption assembly (14) and a cutting assembly (13), the material-loading shaft (12), the adsorption assembly (14) and the cutting assembly (13) are all provided on the base (11), and the material-loading shaft (12) is used for loading the spare material roll (A);
the base (11) is capable of moving between the pickup station and the unwinding station; the adsorption assembly (14) and the cutting assembly (13) are arranged at intervals in a first direction (X) and form a cutting passage (d) therebetween for lifted spare material strip to pass through, and the adsorption assembly (14) and the cutting assembly (13) get close to or away from each other in the first direction (X);
when the base (11) moves to the pickup station, the adsorption assembly (14) and the cutting assembly (13) get close to each other in the first direction (X), such that the cutting assembly (13) cuts off passing spare material strip and the adsorption assembly (14) adsorbs and fixes the cut-off end of the spare material strip.

3. The roll replacing device of claim 2, **characterized in that** the conveying equipment (10) further comprises a material-pushing seat (15) connected to the base (11) movably in an axial direction of the material-loading shaft (12), and the adsorption assembly (14) is provided on the material-pushing seat (15);
when the base (11) moves to the unwinding station and the material-pushing seat (15) is moving in the axial direction of the material-loading shaft (12), the material-pushing seat (15) is capable of pushing the spare material roll (A) on the material-loading shaft (12) and the adsorption assembly (14) which adsorbs and fixes the end of the spare material strip onto the unwinding equipment (30).

4. The roll replacing device of claim 3, **characterized in that** the conveying equipment (10) further comprises a first mounting seat (17) mounted on the base (11), and a second mounting seat (18) provided on the material-pushing seat (15) movably in the first direction (X), the cutting assembly (13) is provided on the first mounting seat (17), and the adsorption assembly (14) is provided on the second mounting seat (18).

5. The roll replacing device of claim 4, **characterized in that** the cutting assembly (13) comprises a mounting member (131), a pressing board (132), a first elastic member (134) and a first cut-off knife (133);
the mounting member (131) is provided on the first mounting seat (17), the pressing board (132) is provided on a side of the mounting member (131) facing the adsorption assembly (14) and can move close to or away from the adsorption assembly (14) relative to the mounting member (131), and the first elastic member (134) is abutted between the pressing board (132) and the mounting member (131);
the first cut-off knife (133) is provided on the mounting member (131), and when the pressing board (132) is moving close to the mounting member (131), the first cut-off knife (133) can penetrate from a first escape groove on the pressing board (132) to the cutting passage (d) and cut off the spare material strip.

6. The roll replacing device of claim 5, **characterized in that** the mounting member (131) is connected to the first mounting seat (17) movably in the first direction (X).

7. The roll replacing device of claim 4, **characterized in that** the adsorption assembly (14) comprises an adsorption seat (141) provided on the second mounting seat (18), and the adsorption seat (141) has a first adsorption surface (b) at a side facing the pressing board (132) for adsorbing the spare material strip.

8. The roll replacing device of claim 7, **characterized in that** the adsorption seat (141) is connected to the second mounting seat (18) movably in the first direction (X).

9. The roll replacing device of claim 1, **characterized in that** the unwinding equipment (30) comprises an unwinding shaft (32), a strip-connecting mechanism (33) and a material-unloading mechanism (34); the unwinding shaft (32) is used for loading the working material roll, and is used for unwinding and outputting the working material strip to the strip-connecting mechanism (33); the strip-connecting mechanism (33) is used for receiving the tape supplied by the tape supplying equipment (40), and can cut off passing working material strip; and the material-unloading mechanism (34) is used for unloading the working material roll on the unwinding shaft (32);
the conveying equipment (10) when moving to the unwinding station is used for transferring the spare material roll (A) onto the unwinding shaft (32), and transferring the lifted end of the spare material strip to the strip-connecting mechanism (33), and the strip-connecting mechanism (33) is also used for sticking the tape between the end of the spare material strip and the cut-off end of the working material strip.

10. The roll replacing device of claim 9, **characterized in that** the strip-connecting mechanism (33) comprises a first strip-connecting assembly (331) and a second strip-connecting assembly (332) arranged at intervals in a first direction (X), which form a strip-connecting space (e) therebetween for the working material strip to penetrate and controllably move close to or away from each other in the first direction (X); the first strip-connecting assembly (331) has a first side face (f1) with a cut-off portion (3315) for cutting off the working material strip and is controllably switchable to a first state;
when the first strip-connecting assembly (331) is in the first state, the first side face (f1) is opposite to the second strip-connecting assembly (332) in the first direction (X), such that when the first strip-connecting assembly (331) and the second strip-connecting assembly (332) are getting close to each other, the cut-off portion (3315) is capable of pressing the working material strip against the second strip-connecting assembly (332) and cutting off the working material strip.

11. The roll replacing device of claim 10, **characterized in that** the conveying equipment (10) is provided with an adsorption seat (141) for adsorbing the end of the spare material strip; when the conveying equipment (10) moves to the unwinding station, the adsorption seat (141) adsorbing the end of the spare material strip can enter into the strip-connecting space (e), and adsorb the cut-off end of the working material strip located in the strip-connecting space (e);
the first strip-connecting assembly (331) further has a second side face (f2) for adsorbing the tape and is further controllably switchable to a second state; when the first strip-connecting assembly (331) is in the second state, the second side face (f2) is opposite to the second strip-connecting assembly (332) in the first direction (X), such that when the first strip-connecting assembly (331) is moving close to the second strip-connecting assembly (332), the tape on the second side face (f2) can be stuck between the cut-off end of the working material strip adsorbed by the adsorption seat (141) and the end of the spare material strip.

12. The roll replacing device of claim 11, **characterized in that** the adsorption seat (141) has a first adsorption surface (b) for adsorbing the end of the spare material strip;
when the adsorption seat (141) enters into the strip-connecting space (e), the first adsorption surface (b) is opposite to the first strip-connecting assembly (331) in the first direction (X).

13. The roll replacing device of claim 11, **characterized in that** the first strip-connecting assembly (331) comprises a first moving seat (3311) and a first gluing member (3314), the first gluing member (3314) is rotatably connected to the first moving seat (3311), and the first moving seat (3311) is used for driving the first gluing member (3314) to move in the first direction (X); two side faces of the first gluing member (3314) are respectively used as the first side face (f1) and the second side face (f2);
when the first gluing member (3314) is being rotated relative to the first moving seat (3311), the first side face (f1) and the second side face (f2) can alternately be opposite to the second strip-connecting assembly (332) in the first direction (X).

14. The roll replacing device of claim 13, **characterized in that** the cut-off portion (3315) comprises a pressing member (3318), a second cut-off knife (3316) and a second elastic member (3317), the pressing member (3318) is provided on the first side face (f1) of the first gluing member (3314) and can get close to or away from the first side face (f1); the second elastic member (3317) abuts between the first gluing member (3314) and the pressing member (3318), and the second cut-off knife (3316) is connected to the first side face (f1) of the first gluing member (3314), such that when the pressing member (3318) is getting close to the first gluing member (3314), the second cut-off knife (3316) can penetrate from a third escape groove on the pressing member (3318) to the strip-connecting space (e) and cut off the working material strip.

15. The roll replacing device of claim 11, **characterized in that** the second strip-connecting assembly (332) has a third side face (g1) and a fourth side face (g2), the fourth side face (g2) is used for sticking the tape, and the second strip-connecting assembly (332) is controllably switchable between a third state and a fourth state;
when the second strip-connecting assembly (332) is in the third state, the third side face (g1) is opposite to the first side face (f1) in the first direction (X);
when the second strip-connecting assembly (332) is in the fourth state, the fourth side face (g2) is opposite to the second side face (f2) in the first direction (X), such that when the second strip-connecting assembly (332) is getting close to the first strip-connecting assembly (331), the tape on the fourth side face (g2) can be stuck to the cut-off end of the working material strip on the second side face (f2), and to the end of the spare material strip.

16. The roll replacing device of claim 15, **characterized in that** the second strip-connecting assembly (332) comprises a second moving seat (3321) and a second gluing member (3324), the second gluing member (3324) is rotatably connected to the second moving seat (3321), and the second moving seat (3321) is used for driving the second gluing member (3324) to move in the first direction (X); two side faces of the second gluing member (3324) are respectively used as the third side face (g1) and the fourth side face (g2);
when the second gluing member (3324) is being rotated relative to the second moving seat (3321), the third side face (g1) and the fourth side face (g2) can alternately be opposite to the first strip-connecting assembly (331) in the first direction (X).

17. The roll replacing device of claim 1, **characterized in that** the pickup equipment (20) comprises a pickup mechanism (21), the pickup mechanism (21) comprises a sixth moving seat (211), a blowing assembly (212) and a holding assembly (213), and both the blowing assembly (212) and the holding assembly (213) are provided on the sixth moving seat (211); the sixth moving seat (211) is movable between a spare material roll (A) on the conveying equipment (10) and a traction position;
when the sixth moving seat (211) moves to the spare material roll (A) on the conveying equipment (10), the blowing assembly (212) can blow up a starting end (a) of a material strip of the spare material roll (A), and the holding assembly (213) can hold the blown up starting end (a) of the material strip; when the sixth moving seat (211) moves to the traction position, the holding assembly (213) tows out the spare material strip on the spare material roll (A) for the conveying equipment (10) so as to cut off the spare material strip at a cutting position between the spare material roll (A) and the traction position.

18. The roll replacing device of claim 17, **characterized in that** the pickup mechanism (21) further comprises a detection assembly (2121) mounted on the sixth moving seat (211), and the blowing assembly (212) is mounted on the detection assembly (2121);
when the sixth moving seat (211) is moving from the traction position toward the spare material roll (A), the detection assembly (2121) is used for detecting whether the blowing assembly (212) abuts against the spare material roll (A) on the conveying equipment (10) or not.

19. The roll replacing device of claim 17, **characterized in that** the pickup equipment (20) further comprises a scrap-collecting mechanism (22), the scrap-collecting mechanism (22) comprises a fifth moving seat (221) and a material-winding shaft (222), one end of the material-winding shaft (222) is provided on the fifth moving seat (221), the material-winding shaft (222) is rotatable about its axis relative to the fifth moving seat (221), the material-winding shaft (222) has a material-forking groove (k1) extending in an axial direction, and the material-forking groove (k1) penetrates through one end of the material-winding shaft (222) away from the fifth moving seat (221);
the fifth moving seat (221) is movable in a third predetermined direction to drive the material-winding shaft (222) to arrive at or depart from the winding position, and the winding position is located between the traction position and the cutting position;
when the fifth moving seat (221) is driving the material-winding shaft (222) to move toward the winding position, the spare material strip towed out by the holding assembly (213) can enter into the material-forking groove (k1).

20. The roll replacing device of claim 19, **characterized in that** the scrap-collecting mechanism (22) further comprises a material-peeling assembly arranged corresponding to the winding position, and the material-peeling assembly comprises a material-peeling actuator (2271) and a material-peeling member (2272) mounted at a driving end of the material-peeling actuator (2271);
when the material-winding shaft (222) is in the winding position, the material-peeling actuator (2271) is capable of driving the material-peeling member (2272) to be inserted from one end of the material-forking groove (k1) close to the fifth moving seat (221).

21. The roll replacing device of claim 1, **characterized in that** the roll replacing device further comprises a material-preparing equipment, the material-preparing equipment comprises a material-preparing mechanism (50) arranged corresponding to the pickup station, and the material-preparing mechanism (50) comprises a fixed seat (51), a material-preparing shaft (52), a first clamping assembly (54) and a second clamping assembly (55);
the material-preparing shaft (52) has a connecting end (521) and a material-loading end (522) as its axial ends, and the material-preparing shaft (52) is connected to the fixed seat (51) via the connecting end (521); the first clamping assembly (54) is mounted on the fixed seat (51) to clamp or loosen a loading tube sleeved on the material-preparing shaft (52) at the connecting end (521), and the loading tube is used for loading with a plurality of spare material rolls; the second clamping assembly (55) is movable relative to the fixed seat (51) in an axial direction of the material-preparing shaft (52), so as to push the spare material roll (A) loaded on the loading tube onto the conveying equipment (10) from the material-loading end (522).

22. The roll replacing device of claim 21, **characterized in that** the material-preparing equipment further comprises a material-loading mechanism with a loading shaft, and the loading shaft is used for sleeving the loading tube loaded with the plurality of spare material rolls;
when the material-loading mechanism moves to the pickup station, the loading shaft is axially docked with the material-loading end (522) of the material-preparing shaft (52), and the second clamping assembly (55) is also used for clamping the loading tube on the loading shaft and driving the loading tube to move towards the connecting end (521).

## Patentansprüche

1. Rollenwechselvorrichtung, **dadurch gekennzeichnet, dass** sie eine Greifstation und eine Abwickelstation aufweist, wobei die Rollenwechselvorrichtung Folgendes umfasst:
eine Transporteinrichtung (10), die zwischen der Greifstation und der Abwickelstation beweglich ist, wobei die Transporteinrichtung (10) zum Tragen einer Reservematerialrolle (A) dient;
eine Greifeinrichtung (20), die zum Anheben eines Endes eines Reservematerialbandes der Reservematerialrolle (A) an der Greifstation dient, sodass die Transporteinrichtung (10) das angehobene Ende des Reservematerialbandes fixiert;
eine Abwickeleinrichtung (30), die an der Abwickelstation angeordnet ist, wobei die Abwickeleinrichtung zum Abwickeln und Ausgeben eines Arbeitsmaterialbandes dient, und in der Lage ist, das Arbeitsmaterialband abzuschneiden und das abgeschnittene Ende des Arbeitsmaterialbandes zu fixieren; und
eine Klebebandzuführreinrichtung (40), die zur Abwickelstation beweglich ist, wobei, wenn sich die Klebebandzuführreinrichtung (40) zur Abwickelstation bewegt, die Klebebandzuführreinrichtung verwendet wird, um ein Klebeband der Abwickeleinrichtung (30) zuzuführen,
wobei, wenn sich die Transporteinrichtung (10) zur Abwickelstation bewegt, die Transporteinrichtung auch verwendet wird, um die Reservematerialrolle (A) und das Ende des Reservematerialbandes an die Abwickeleinrichtung (30) zu übergeben, sodass die Abwickeleinrichtung (30) das Klebeband an das Ende des Reservematerialbandes und das abgeschnittene Ende des Arbeitsmaterialbandes klebt.

2. Rollenwechselvorrichtung nach Anspruch 1, **dadurch gekennzeichnet, dass** die Transporteinrichtung (10) eine Basis (11), eine Beladungswelle (12), eine Adsorptionsanordnung (14) und eine Schneidanordnung (13) umfasst, wobei die Beladungswelle (12), die Adsorptionsanordnung (14) und die Schneidanordnung (13) alle auf der Basis (11) angeordnet sind, die Beladungswelle (12) zum Beladen der Reservematerialrolle (A) dient;
die Basis (11) zwischen der Greifstation und der Abwickelstation beweglich ist; die Adsorptionsanordnung (14) und die Schneidanordnung (13) entlang einer ersten Richtung (X) beabstandet angeordnet sind und zwischen den beiden ein Schneidkanal ausgebildet ist, wobei der Schneidkanal für den Durchgang des angehobenen Reservematerialbandes vorgesehen ist, und die Adsorptionsanordnung (14) und die Schneidanordnung (13) in der Lage sind, sich entlang der ersten Richtung (X) einander anzunähern oder voneinander zu entfernen;
wenn sich die Basis (11) zur Greifstation bewegt, sich die Adsorptionsanordnung (14) und die Schneidanordnung (13) entlang der ersten Richtung (X) einander annähern, sodass die Schneidanordnung (13) das durchlaufende Reservematerialband abschneidet und die Adsorptionsanordnung (14) das abgeschnittene Ende des Reservematerialbands adsorbiert und fixiert.

3. Rollenwechselvorrichtung nach Anspruch 2, **dadurch gekennzeichnet, dass** die Transporteinrichtung (10) ferner einen Schubsitz (15) umfasst, wobei der Schubsitz entlang der axialen Richtung der Beladungswelle (12) beweglich mit der Basis (11) verbunden ist, und die Adsorptionsanordnung (14) auf dem Schubsitz (15) angeordnet ist;
wenn sich die Basis (11) zur Abwickelstation bewegt und sich der Schubsitz (15) entlang der axialen Richtung der Beladungswelle (12) bewegt, der Schubsitz (15) in der Lage ist, die Reservematerialrolle (A) auf der Beladungswelle(12) und die Adsorptionsanordnung (14), die das Ende des Reservematerialbands adsorbiert und fixiert, zur Abwickeleinrichtung zu schieben.

4. Rollenwechselvorrichtung nach Anspruch 3, **dadurch gekennzeichnet, dass** die Transporteinrichtung (10) ferner einen ersten Montagesitz (17) und einen zweiten Montagesitz (18) umfasst, wobei der erste Montagesitz (17) auf der Basis (11) montiert ist, der zweite Montagesitz (18) entlang der ersten Richtung (X) beweglich auf dem Schubsitz (15) angeordnet ist, die Schneidanordnung (13) auf dem ersten Montagesitz (17) angeordnet ist und die Adsorptionsanordnung (14) auf dem zweiten Montagesitz (18) angeordnet ist.

5. Rollenwechselvorrichtung nach Anspruch 4, **dadurch gekennzeichnet, dass** die Schneidanordnung (13) ein Montageelement (131), eine Druckplatte (132), ein erstes elastisches Element (134) und ein erstes Schneidemesser (133) umfasst, wobei
das Montageelement (131) am ersten Montagesitz (17) angeordnet ist, die Druckplatte (132) auf einer der Adsorptionsanordnung (14) zugewandten Seite des Montageelements (131) angeordnet ist und in der Lage ist, sich relativ zum Montageelement (131) näher an die Adsorptionsanordnung (14) heran oder von ihr weg zu bewegen, und das erste elastische Element (134) zwischen der Druckplatte (132) und dem Montageelement (131) anliegt;
das erste Schneidemesser (133) am Montageelement (131) angeordnet ist und, während sich die Druckplatte (132) näher an dem Montageelement (131) heran bewegt, das erste Schneidemesser (133) in der Lage ist, durch eine erste Ausweichnut an der Druckplatte (132) in den Schneidkanal einzudringen, und das Reservematerialband abzuschneiden.

6. Rollenwechselvorrichtung nach Anspruch 5, **dadurch gekennzeichnet, dass** das Montageelement (131) entlang der ersten Richtung (X) beweglich mit dem ersten Montagesitz (17) verbunden ist.

7. Rollenwechselvorrichtung nach Anspruch 4, **dadurch gekennzeichnet, dass** die Adsorptionsanordnung (14) einen Adsorptionssitz (141) umfasst, der am zweiten Montagesitz (18) angeordnet ist, wobei der Adsorptionssitz (141) auf einer der Druckplatte (132) zugewandten Seite eine erste Adsorptionsfläche (b) zum Adsorbieren des Reservematerialbands aufweist.

8. Rollenwechselvorrichtung nach Anspruch 7, **dadurch gekennzeichnet, dass** der Adsorptionssitz (141) entlang der ersten Richtung (X) beweglich mit dem zweiten Montagesitz (18) verbunden ist.

9. Rollenwechselvorrichtung nach Anspruch 1, **dadurch gekennzeichnet, dass** die Abwickeleinrichtung (30) eine Abwicklungswelle (32), einen Bandaufnahme-Mechanismus (33) und einen Materialentlade-Mechanismus (34) umfasst, wobei die Abwicklungswelle (32) zum Beladen der Arbeitsmaterialrolle und zum Abwickeln des Arbeitsmaterialbandes und Ausgeben an den Bandaufnahme-Mechanismus (33) dient; der Bandaufnahme-Mechanismus (33) zum Aufnehmen des von der Klebebandzuführreinrichtung (40) zugeführten Klebebandes dient und in der Lage ist, das durchlaufende Arbeitsmaterialband abzuschneiden; der Materialentlade-Mechanismus (34) zum Entladen der Arbeitsmaterialrolle auf der Abwicklungswelle (32) dient;
wenn sich die Transporteinrichtung (10) zur Abwickelstation bewegt, die Transporteinrichtung verwendet wird, um die Reservematerialrolle (A) an die Abwicklungswelle (32) zu übertragen und das angehobene Ende des Reservematerialbands an den Bandaufnahme-Mechanismus (33) zu übertragen, und der Bandaufnahme-Mechanismus (33) auch verwendet wird, um das Klebeband an das Ende des Reservematerialbandes und das abgeschnittene Ende des Arbeitsmaterialbandes zu kleben.

10. Rollenwechselvorrichtung nach Anspruch 9, **dadurch gekennzeichnet, dass** der Bandaufnahme-Mechanismus (33) eine erste Bandaufnahmeanordnung (331) und eine zweite Bandaufnahmeanordnung (332) umfasst, die entlang der ersten Richtung (X) beabstandet angeordnet sind, wobei zwischen der ersten Bandaufnahmeanordnung und der zweiten Bandaufnahmeanordnung ein Bandaufnahmeraum (e) für den Durchgang des Arbeitsmaterialbandes ausgebildet ist, und sich die erste Bandaufnahmeanordnung und die zweite Bandaufnahmeanordnung entlang der ersten Richtung (X) steuerbar einander annähern oder voneinander entfernen; die erste Bandaufnahmeanordnung (331) eine erste Seitenfläche (f1) aufweist, wobei die erste Seitenfläche (f1) einen Schneidabschnitt (3315) zum Abschneiden des Arbeitsmaterialbandes aufweist, und die erste Bandaufnahmeanordnung steuerbar in einen ersten Zustand geschaltet wird;
wenn sich die erste Bandaufnahmeanordnung (331) im ersten Zustand befindet, die erste Seitenfläche (f1) und die zweite Bandaufnahmeanordnung (332) in der ersten Richtung (X) einander gegenüberliegen, sodass, während sich die erste Bandaufnahmeanordnung (331) und die zweite Bandaufnahmeanordnung (332) einander annähern, der Schneidabschnitt (3315) in der Lage ist, das Arbeitsmaterialband gegen die zweite Bandaufnahmeanordnung (332) zu drücken und das Arbeitsmaterialband abzuschneiden.

11. Rollenwechselvorrichtung nach Anspruch 10, **dadurch gekennzeichnet, dass** die Transporteinrichtung (10) den Adsorptionssitz (141) zum Adsorbieren des Endes des Reservematerialbands aufweist, wobei, wenn sich die Transporteinrichtung (10) zur Abwickelstation bewegt, der Adsorptionssitz (141) mit dem adsorbierten Ende des Reservematerialbands in der Lage ist, in den Bandaufnahmeraum (e) einzutreten und das abgeschnittene Ende des im Bandaufnahmeraum (e) befindlichen Arbeitsmaterialbands zu adsorbieren;
die erste Bandaufnahmeanordnung (331) ferner eine zweite Seitenfläche (f2) zum Adsorbieren des Klebebandes aufweist, und die erste Bandaufnahmeanordnung steuerbar in einen zweiten Zustand geschaltet wird; wenn sich die erste Bandaufnahmeanordnung (331) im zweiten Zustand befindet, die zweite Seitenfläche (f2) und die zweite Bandaufnahmeanordnung (332) in der ersten Richtung (X) einander gegenüberliegen, sodass, während sich die erste Bandaufnahmeanordnung (331) der zweiten Bandaufnahmeanordnung (332) annähert, die erste Bandaufnahmeanordnung in der Lage ist, das Klebeband auf der zweiten Seitenfläche (f2) an das vom Adsorptionssitz (141) adsorbierten abgeschnittenen Ende des Arbeitsmaterialbands und das Ende des Reservematerialbands zu kleben.

12. Rollenwechselvorrichtung nach Anspruch 11, **dadurch gekennzeichnet, dass** der Adsorptionssitz (141) eine erste Adsorptionsfläche (b) zum Adsorbieren des Endes des Reservematerialbands aufweist, wobei,
wenn der Adsorptionssitz (141) in den Bandaufnahmeraum (e) eintritt, die erste Adsorptionsfläche (b) und die erste Bandaufnahmeanordnung (331) in der ersten Richtung (X) gegenüberliegen.

13. Rollenwechselvorrichtung nach Anspruch 11, **dadurch gekennzeichnet, dass** die erste Bandaufnahmeanordnung (331) einen ersten Bewegungssitz (3311) und ein erstes Klebeband-Auflegeelement (3314) umfasst, wobei das erste Klebeband-Auflegeelement (3314) drehbar mit dem ersten Bewegungssitz (3311) verbunden ist, und der erste Bewegungssitz (3311) zum Bewegen des ersten Klebeband-Auflegeelements (3314) entlang der ersten Richtung (X) dient; zwei Seitenflächen des ersten Klebeband-Auflegeelements (3314) als erste Seitenfläche (f1) bzw. zweite Seitenfläche (f2) dienen;
während sich das erste Klebeband-Auflegeelement (3314) relativ zum ersten Bewegungssitz (3311) dreht, die erste Seitenfläche (f1) und die zweite Seitenfläche (f2) in der Lage sind, abwechselnd der zweiten Bandaufnahmeanordnung (332) in der ersten Richtung (X) gegenüberzuliegen.

14. Rollenwechselvorrichtung nach Anspruch 13, **dadurch gekennzeichnet, dass** der Schneidabschnitt (3315) ein Druckelement (3318), ein zweites Schneidemesser (3316) und ein zweites elastisches Element (3317) umfasst, wobei das Druckelement (3318) auf der ersten Seitenfläche (f1) des ersten Klebeband-Auflegeelements (3314) angeordnet ist und in der Lage ist, sich der ersten Seitenfläche (f1) anzunähern oder von der zu entfernen; das zweite elastische Element (3317) zwischen dem ersten Klebeband-Auflegeelement (3314) und dem Druckelement (3318) anliegt, das zweite Schneidemesser (3316) mit der ersten Seitenfläche (f1) des ersten Klebeband-Auflegeelements (3314) verbunden ist, sodass, während sich das Druckelement (3318) dem ersten Klebeband-Auflegeelement (3314) annähert, das zweite Schneidemesser (3316) in der Lage ist, durch eine dritte Ausweichnut am Druckelement (3318) in den Bandaufnahmeraum (e) einzudringen, und das Arbeitsmaterialband abzuschneiden.

15. Rollenwechselvorrichtung nach Anspruch 11, **dadurch gekennzeichnet, dass** die zweite Bandaufnahmeanordnung (332) eine dritte Seitenfläche (g1) und eine vierte Seitenfläche (g2) aufweist, wobei die vierte Seitenfläche (g2) zum Adsorbieren des Klebebandes dient, und die zweite Bandaufnahmeanordnung (332) steuerbar zwischen einem dritten Zustand und einem vierten Zustand geschaltet wird;
wenn sich die zweite Bandaufnahmeanordnung (332) im dritten Zustand befindet, die dritte Seitenfläche (g1) und die erste Seitenfläche (f1) in der ersten Richtung (X) gegenüberliegen;
wenn sich die zweite Bandaufnahmeanordnung (332) im vierten Zustand befindet, die vierte Seitenfläche (g2) und die zweite Seitenfläche (f2) in der ersten Richtung (X) gegenüberliegen, sodass, während sich die zweite Bandaufnahmeanordnung (332) der ersten Bandaufnahmeanordnung (331) annähert, die zweite Bandaufnahmeanordnung in der Lage ist, das Klebeband auf der vierten Seitenfläche (g2) an das abgeschnittene Ende des Arbeitsmaterialbandes und das Ende des Reservematerialbandes auf der zweiten Seitenfläche (f2) zu kleben.

16. Rollenwechselvorrichtung nach Anspruch 15, **dadurch gekennzeichnet, dass** die zweite Bandaufnahmeanordnung (332) einen zweiten Bewegungssitz (3321) und ein zweites Klebeband-Auflegeelement (3324) umfasst, wobei das zweite Klebeband-Auflegeelement (3324) drehbar mit dem zweiten Bewegungssitz (3321) verbunden ist, und der zweite Bewegungssitz (3321) zum Bewegen des zweiten Klebeband-Auflegeelements (3324) entlang der ersten Richtung (X) dient; wobei zwei Seitenflächen des zweiten Klebeband-Auflegeelements (3324) als dritte Seitenfläche (g1) bzw. vierte Seitenfläche (g2) dienen;
während sich das zweite Klebeband-Auflegeelement (3324) relativ zum zweiten Bewegungssitz (3321) dreht, die dritte Seitenfläche (g1) und die vierte Seitenfläche (g2) in der Lage sind, abwechselnd der ersten Bandaufnahmeanordnung (331) in der ersten Richtung (X) gegenüberzuliegen.

17. Rollenwechselvorrichtung nach Anspruch 1, **dadurch gekennzeichnet, dass** die Greifeinrichtung (20) einen Greifmechanismus (21) umfasst, wobei der Greifmechanismus (21) einen sechsten Bewegungssitz (211), eine Luftblasanordnung (212) und eine Klemmanordnung (213) umfasst, wobei die Luftblasanordnung (212) und die Klemmanordnung (213) beide an dem sechsten Bewegungssitz (211) angeordnet sind; der sechste Bewegungssitz (211) zwischen der Reservematerialrolle (A) auf der Transporteinrichtung (10) und einer Ziehposition beweglich ist;
wenn sich der sechste Bewegungssitz (211) zur Reservematerialrolle (A) auf der Transporteinrichtung (10) bewegt, die Luftblasanordnung (212) in der Lage ist, das Bandanfangsende der Reservematerialrolle (A) aufzublasen, und die Klemmanordnung (213) in der Lage ist, das aufgeblasene Bandanfangsende zu klemmen; wenn sich der sechste Bewegungssitz (211) in die Ziehposition bewegt, die Klemmanordnung (213) den Reservematerialband der Reservematerialrolle (A) herauszieht, sodass die Transporteinrichtung (10) den Reservematerialband von einer Schneidposition zwischen der Reservematerialrolle (A) und der Ziehposition abschneidet.

18. Rollenwechselvorrichtung nach Anspruch 17, **dadurch gekennzeichnet, dass** der Greifmechanismus (21) ferner eine auf dem sechsten Bewegungssitz (211) montierte Erfassungsanordnung (2121) umfasst, wobei die Luftblasanordnung (212) auf der Erfassungsanordnung (2121) montiert ist;
während sich der sechste Bewegungssitz (211) von der Ziehposition in Richtung der Reservematerialrolle (A) bewegt, die Erfassungsanordnung (2121) verwendet wird, um zu erkennen, ob die Luftblasanordnung (212) an der Reservematerialrolle (A) auf der Transporteinrichtung (10) anliegt.

19. Rollenwechselvorrichtung nach Anspruch 17, **dadurch gekennzeichnet, dass** die Greifeinrichtung (20) ferner einen Abfallsammelmechanismus (22) umfasst, wobei der Abfallsammelmechanismus (22) einen fünften Bewegungssitz (221) und eine Materialaufnahmewelle (222) umfasst, wobei die Materialaufnahmewelle (222) an einem Ende auf dem fünften Bewegungssitz (221) angeordnet ist, die Materialaufnahmewelle (222) relativ zum fünften Bewegungssitz (221) um ihre eigene Achse drehbar ist, und die Materialaufnahmewelle (222) eine sich in axialer Richtung erstreckende Material-Gabelnut (k1) aufweist, wobei die Material-Gabelnut (k1) ein Ende der Materialaufnahmewelle (222) durchdringt, das vom fünften Bewegungssitz (221) abgewandt ist;
der fünfte Bewegungssitz (221) entlang einer dritten voreingestellten Richtung beweglich ist, um die Materialaufnahmewelle (222) zu einer Aufwickelposition zu bewegen oder von dieser wegzubewegen, wobei sich die Aufwickelposition zwischen der Ziehposition und der Schneidposition befindet;
während der fünfte Bewegungssitz (221) die Materialaufnahmewelle (222) in Richtung der Aufwickelposition bewegt, das von der Klemmanordnung (213) herausgezogene Reservematerialband in der Lage ist, in die Material-Gabelnut (k1) einzutreten.

20. Rollenwechselvorrichtung nach Anspruch 19, **dadurch gekennzeichnet, dass** der Abfallsammelmechanismus (22) ferner eine Materialabstreifsanordnung umfasst, die entsprechend der Aufwickelposition angeordnet ist, wobei die Materialabstreifsanordnung ein Materialabstreifantriebselement (2271) und ein Materialabstreifelement (2272) umfasst, das an einem Antriebsende des Materialabstreifantriebselements (2271) angebracht ist;
wenn sich die Materialaufnahmewelle (222) in der Aufwickelposition befindet, das Materialabstreifantriebselement (2271) in der Lage ist, das Materialabstreifelement (2272) anzutreiben, dass es von einem Ende der Material-Gabelnut (k1) in der Nähe des fünften Bewegungssitzes (221) eingeführt wird.

21. Rollenwechselvorrichtung nach Anspruch 1, **dadurch gekennzeichnet, dass** die Rollenwechselvorrichtung ferner eine Materialvorbereitungsvorrichtung umfasst, wobei die Materialvorbereitungsvorrichtung einen Materialvorbereitungsmechanismus (50) umfasst, der entsprechend der Greifstation angeordnet ist, wobei der Materialvorbereitungsmechanismus (50) einen festen Sitz (51), eine Materialvorbereitungswelle (52), eine erste Klemmanordnung (54) und eine zweite Klemmanordnung (55) umfasst;
die Materialvorbereitungswelle (52) als ihre axialen Enden ein Verbindungsende (521) und ein Zuführende (522) aufweist, und die Materialvorbereitungswelle (52) über das Verbindungsende (521) mit dem festen Sitz (51) verbunden ist; die erste Klemmanordnung (54) auf dem festen Sitz (51) montiert ist, um ein auf der Materialvorbereitungswelle (52) aufgestecktes Beladungsrohr am Verbindungsende (521) zu klemmen oder zu lösen, wobei das Beladungsrohr zum Beladen der mehreren Reservematerialrollen (A) verwendet wird; die zweite Klemmanordnung (55) relativ zum festen Sitz (51) entlang der axialen Richtung der Materialvorbereitungswelle (52) beweglich ist, um die auf dem Beladungsrohr beladene Reservematerialrolle (A) vom Zuführende (522) zur Transporteinrichtung (10) zu schieben.

22. Rollenwechselvorrichtung nach Anspruch 21, **dadurch gekennzeichnet, dass** die Materialvorbereitungsvorrichtung ferner einen Zuführmechanismus umfasst, wobei der Zuführmechanismus eine Zuführwelle umfasst, wobei die Zuführwelle dazu vorgesehen ist, dass das Beladungsrohr mit den mehreren beladenen Reservematerialrollen (A) auf dieser aufgesteckt ist;
wenn sich der Zuführmechanismus zur Greifstation bewegt, die Zuführwelle axial an das Zuführende (522) der Materialvorbereitungswelle (52) angedockt wird, und die zweite Klemmanordnung (55) auch zum Klemmen des Beladungsrohrs auf der Zuführwelle und zum Bewegen des Beladungsrohrs in Richtung des Verbindungsendes (521) dient.

## Revendications

1. Un équipement de remplacement de rouleaux, **caractérisé en ce qu'**il comprend un poste de prise et un poste de déroulement, ledit équipement de remplacement de rouleaux comprenant :
un équipement de transport (10), apte à se déplacer entre ledit poste de prise et ledit poste de déroulement, ledit équipement de transport (10) étant destiné à supporter un rouleau de matériau de rechange (A) ;
un équipement de prise (20), destiné à soulever l'extrémité de la bande de matériau de rechange sur le rouleau de matériau de rechange (A) au niveau du poste de prise, de manière à permettre à l'équipement de transport (10) de fixer l'extrémité soulevée de ladite bande de matériau de rechange ;
un équipement de déroulement (30), disposé au niveau du poste de déroulement, ledit équipement de déroulement étant destiné à dérouler et à délivrer une bande de matériau de travail, à être apte à couper ladite bande de matériau de travail et à fixer l'extrémité coupée de ladite bande de matériau de travail ; et
un équipement d'alimentation en ruban adhésif (40), apte à se déplacer jusqu'au poste de déroulement ; lorsque ledit équipement d'alimentation en ruban adhésif (40) se déplace jusqu'au poste de déroulement, il est destiné à fournir un ruban adhésif à l'équipement de déroulement (30) ;
dans lesquels, lorsque l'équipement de transport (10) se déplace jusqu'au poste de déroulement, il est en outre destiné à transférer le rouleau de matériau de rechange (A) et l'extrémité de la bande de matériau de rechange sur l'équipement de déroulement (30), de manière à permettre à l'équipement de déroulement (30) de coller le ruban adhésif entre l'extrémité de la bande de matériau de rechange et l'extrémité coupée de la bande de matériau de travail.

2. L'équipement de remplacement de rouleaux selon la revendication 1, **caractérisé en ce que** l'équipement de transport (10) comprend une base (11), un arbre de chargement (12), un ensemble d'adsorption (14) et un ensemble de coupe (13), l'arbre de chargement (12), l'ensemble d'adsorption (14) et l'ensemble de coupe (13) sont tous disposés sur la base (11), et l'arbre de chargement (12) est destiné à charger le rouleau de matériau de rechange (A) ;
la base (11) est apte à se déplacer entre le poste de prise et le poste de déroulement ; l'ensemble d'adsorption (14) et l'ensemble de coupe (13) sont disposés à intervalle le long d'une première direction (X), et un passage de coupe est formé entre eux, ledit passage de coupe étant destiné à permettre le passage de la bande de matériau de rechange soulevée, l'ensemble d'adsorption (14) et l'ensemble de coupe (13) peuvent se rapprocher ou s'éloigner l'un de l'autre le long de la première direction (X) ;
lorsque la base (11) se déplace jusqu'au poste de prise, l'ensemble d'adsorption (14) et l'ensemble de coupe (13) se rapprochent l'un de l'autre le long de la première direction (X), de manière à permettre à l'ensemble de coupe (13) de couper la bande de matériau de rechange passant par ledit passage, et à l'ensemble d'adsorption (14) de fixer par adsorption l'extrémité de la bande de matériau de rechange après coupe.

3. L'équipement de remplacement de rouleaux selon la revendication 2, **caractérisé en ce que** l'équipement de transport (10) comprend en outre un support de poussée de matériau (15), ledit support de poussée de matériau est relié de manière mobile à la base (11) le long de la direction axiale de l'arbre de chargement (12), et l'ensemble d'adsorption (14) est disposé sur le support de poussée de matériau (15) ;
lorsque la base (11) se déplace jusqu'au poste de déroulement et que le support de poussée de matériau (15) se déplace le long de la direction axiale de l'arbre de chargement (12), le support de poussée de matériau (15) peut pousser le rouleau de matériau de rechange (A) sur l'arbre de chargement (12) et l'ensemble d'adsorption (14) fixant par adsorption l'extrémité de la bande de matériau de rechange sur l'équipement de déroulement.

4. L'équipement de remplacement de rouleaux selon la revendication 3, **caractérisé en ce que** l'équipement de transport (10) comprend en outre un premier support de montage (17) et un deuxième support de montage (18), le premier support de montage (17) est monté sur la base (11), le deuxième support de montage (18) est disposé de manière mobile sur le support de poussée de matériau (15) le long de la première direction (X), l'ensemble de coupe (13) est disposé sur le premier support de montage (17), et l'ensemble d'adsorption (14) est disposé sur le deuxième support de montage (18).

5. L'équipement de remplacement de rouleaux selon la revendication 4, **caractérisé en ce que** l'ensemble de coupe (13) comprend un élément de montage (131), une plaque de pression (132), un premier élément élastique (134) et un premier couteau de coupe (133) ; l'élément de montage (131) est disposé sur le premier support de montage (17), la plaque de pression (132) est disposée sur le côté de l'élément de montage (131) faisant face à l'ensemble d'adsorption (14), et peut se déplacer en se rapprochant ou en s'éloignant de l'ensemble d'adsorption (14) par rapport à l'élément de montage (131) ; le premier élément élastique (134) est en butée entre la plaque de pression (132) et l'élément de montage (131) ;
le premier couteau de coupe (133) est disposé sur l'élément de montage (131), et lors du déplacement de la plaque de pression (132) en se rapprochant de l'élément de montage (131), le premier couteau de coupe (133) peut passer à travers la première rainure d'évasion sur la plaque de pression (132) jusqu'au passage de coupe et couper la bande de matériau de rechange.

6. L'équipement de remplacement de rouleaux selon la revendication 5, **caractérisé en ce que** l'élément de montage (131) est relié de manière mobile au premier support de montage (17) le long de la première direction (X).

7. L'équipement de remplacement de rouleaux selon la revendication 4, **caractérisé en ce que** l'ensemble d'adsorption (14) comprend un support d'adsorption (141) disposé sur le deuxième support de montage (18) ; le côté du support d'adsorption (141) faisant face à la plaque de pression (132) comporte une première surface d'adsorption (b) destinée à adsorber la bande de matériau de rechange.

8. L'équipement de remplacement de rouleaux selon la revendication 7, **caractérisé en ce que** le support d'adsorption (141) est relié de manière mobile au deuxième support de montage (18) le long de la première direction (X).

9. L'équipement de remplacement de rouleaux selon la revendication 1, **caractérisé en ce que** l'équipement de déroulement (30) comprend un arbre de déroulement (32), un mécanisme de jonction de bandes (33) et un mécanisme de déchargement (34) ; l'arbre de déroulement (32) est destiné à charger le rouleau de matériau de travail et à dérouler et à délivrer la bande de matériau de travail au mécanisme de jonction de bandes (33) ; le mécanisme de jonction de bandes (33) est destiné à recevoir le ruban adhésif fourni par l'équipement d'alimentation en ruban adhésif (40) et à être apte à couper la bande de matériau de travail passant par lui ; le mécanisme de déchargement (34) est destiné à décharger le rouleau de matériau de travail sur l'arbre de déroulement (32) ;
lorsque l'équipement de transport (10) se déplace jusqu'au poste de déroulement, il est destiné à transférer le rouleau de matériau de rechange (A) sur l'arbre de déroulement (32) et à transférer l'extrémité soulevée de la bande de matériau de rechange au mécanisme de jonction de bandes (33) ; le mécanisme de jonction de bandes (33) est en outre destiné à coller le ruban adhésif entre l'extrémité de la bande de matériau de rechange et l'extrémité coupée de la bande de matériau de travail.

10. L'équipement de remplacement de rouleaux selon la revendication 9, **caractérisé en ce que** le mécanisme de jonction de bandes (33) comprend un premier ensemble de jonction de bandes (331) et un deuxième ensemble de jonction de bandes (332) disposés à intervalle le long de la première direction (X) ; un espace de jonction de bandes (e) permettant le passage de la bande de matériau de travail est formé entre le premier ensemble de jonction de bandes et le deuxième ensemble de jonction de bandes, et ils peuvent se rapprocher ou s'éloigner l'un de l'autre de manière contrôlée le long de la première direction (X) ; le premier ensemble de jonction de bandes (331) comporte une première face latérale (f1), et une partie de coupe (3315) destinée à couper la bande de matériau de travail est disposée sur la première face latérale (f1) ; le premier ensemble de jonction de bandes peut être commuté de manière contrôlée vers un premier état ;
lorsque le premier ensemble de jonction de bandes (331) est dans le premier état, la première face latérale (f1) est opposée au deuxième ensemble de jonction de bandes (332) dans la première direction (X), de manière à permettre, lors du rapprochement du premier ensemble de jonction de bandes (331) et du deuxième ensemble de jonction de bandes (332), à la partie de coupe (3315) de presser la bande de matériau de travail contre le deuxième ensemble de jonction de bandes (332) et de couper la bande de matériau de travail.

11. L'équipement de remplacement de rouleaux selon la revendication 10, **caractérisé en ce que** l'équipement de transport (10) comporte un support d'adsorption (141) destiné à adsorber l'extrémité de la bande de matériau de rechange ; lorsque l'équipement de transport (10) se déplace jusqu'au poste de déroulement, le support d'adsorption (141) adsorbant l'extrémité de la bande de matériau de rechange peut entrer dans l'espace de jonction de bandes (e) et adsorber l'extrémité coupée de la bande de matériau de travail située dans l'espace de jonction de bandes (e) ;
le premier ensemble de jonction de bandes (331) comporte en outre une deuxième face latérale (f2) destinée à adsorber le ruban adhésif, et peut être commuté de manière contrôlée vers un deuxième état ; lorsque le premier ensemble de jonction de bandes (331) est dans le deuxième état, la deuxième face latérale (f2) est opposée au deuxième ensemble de jonction de bandes (332) dans la première direction (X), de manière à permettre, lors du rapprochement du premier ensemble de jonction de bandes (331) vers le deuxième ensemble de jonction de bandes (332), de coller le ruban adhésif sur la deuxième face latérale (f2) entre l'extrémité coupée de la bande de matériau de travail adsorbée par le support d'adsorption (141) et l'extrémité de la bande de matériau de rechange.

12. L'équipement de remplacement de rouleaux selon la revendication 11, **caractérisé en ce que** le support d'adsorption (141) comporte une première surface d'adsorption (b) destinée à adsorber l'extrémité de la bande de matériau de rechange ;
lorsque le support d'adsorption (141) entre dans l'espace de jonction de bandes (e), la première surface d'adsorption (b) est opposée au premier ensemble de jonction de bandes (331) dans la première direction (X).

13. L'équipement de remplacement de rouleaux selon la revendication 11, **caractérisé en ce que** le premier ensemble de jonction de bandes (331) comprend un premier support mobile (3311) et un premier élément de collage de ruban (3314) ; le premier élément de collage de ruban (3314) est relié de manière rotative au premier support mobile (3311), et le premier support mobile (3311) est destiné à entraîner le premier élément de collage de ruban (3314) à se déplacer le long de la première direction (X) ; les deux faces latérales du premier élément de collage de ruban (3314) servent respectivement de première face latérale (f1) et de deuxième face latérale (f2) ;
lors de la rotation du premier élément de collage de ruban (3314) par rapport au premier support mobile (3311), la première face latérale (f1) et la deuxième face latérale (f2) peuvent être alternativement opposées au deuxième ensemble de jonction de bandes (332) dans la première direction (X).

14. L'équipement de remplacement de rouleaux selon la revendication 13, **caractérisé en ce que** la partie de coupe (3315) comprend un élément de pression (3318), un deuxième couteau de coupe (3316) et un deuxième élément élastique (3317) ; l'élément de pression (3318) est disposé sur la première face latérale (f1) du premier élément de collage de ruban (3314) et orienté vers la première face latérale (f1), pouvant se rapprocher ou s'éloigner; le deuxième élément élastique (3317) est en butée entre le premier élément de collage de ruban (3314) et l'élément de pression (3318) ; le deuxième couteau de coupe (3316) est relié à la première face latérale (f1) du premier élément de collage de ruban (3314), de manière à permettre, lors du rapprochement de l'élément de pression (3318) par rapport au premier élément de collage de ruban (3314), au deuxième couteau de coupe (3316) de passer à travers la troisième rainure d'évasion sur l'élément de pression (3318) jusqu'à l'espace de jonction de bandes (e) et de couper la bande de matériau de travail.

15. L'équipement de remplacement de rouleaux selon la revendication 11, **caractérisé en ce que** le deuxième ensemble de jonction de bandes (332) comporte une troisième face latérale (g1) et une quatrième face latérale (g2) ; la quatrième face latérale (g2) est destinée à adsorber le ruban adhésif, et le deuxième ensemble de jonction de bandes (332) peut être commuté de manière contrôlée entre un troisième état et un quatrième état ;
lorsque le deuxième ensemble de jonction de bandes (332) est dans le troisième état, la troisième face latérale (g1) est opposée à la première face latérale (f1) dans la première direction (X) ;
lorsque le deuxième ensemble de jonction de bandes (332) est dans le quatrième état, la quatrième face latérale (g2) est opposée à la deuxième face latérale (f2) dans la première direction (X), de manière à permettre, lors du rapprochement du deuxième ensemble de jonction de bandes (332) vers le premier ensemble de jonction de bandes (331), de coller le ruban adhésif sur la quatrième face latérale (g2) sur l'extrémité coupée de la bande de matériau de travail et l'extrémité de la bande de matériau de rechange situées sur la deuxième face latérale (f2).

16. L'équipement de remplacement de rouleaux selon la revendication 15, **caractérisé en ce que** le deuxième ensemble de jonction de bandes (332) comprend un deuxième support mobile (3321) et un deuxième élément de collage de ruban (3324) ; le deuxième élément de collage de ruban (3324) est relié de manière rotative au deuxième support mobile (3321), et le deuxième support mobile (3321) est destiné à entraîner le deuxième élément de collage de ruban (3324) à se déplacer le long de la première direction (X) ; les deux faces latérales du deuxième élément de collage de ruban (3324) servent respectivement de troisième face latérale (g1) et de quatrième face latérale (g2) ;
lors de la rotation du deuxième élément de collage de ruban (3324) par rapport au deuxième support mobile (3321), la troisième face latérale (g1) et la quatrième face latérale (g2) peuvent être alternativement opposées au premier ensemble de jonction de bandes (331) dans la première direction (X).

17. L'équipement de remplacement de rouleaux selon la revendication 1, **caractérisé en ce que** l'équipement de prise (20) comprend un mécanisme de prise (21) ; le mécanisme de prise (21) comprend un sixième support mobile (211), un ensemble de soufflage (212) et un ensemble de serrage (213) ; l'ensemble de soufflage (212) et l'ensemble de serrage (213) sont tous disposés sur le sixième support mobile (211) ; le sixième support mobile (211) est mobile entre le rouleau de matériau de rechange (A) sur l'équipement de transport (10) et une position de traction ;
lorsque le sixième support mobile (211) se déplace jusqu'au rouleau de matériau de rechange (A) sur l'équipement de transport (10), l'ensemble de soufflage (212) peut soulever l'extrémité initiale de la bande de matériau du rouleau de matériau de rechange (A), et l'ensemble de serrage (213) peut serrer l'extrémité initiale de la bande de matériau soulevée ; lorsque le sixième support mobile (211) se déplace jusqu'à la position de traction, l'ensemble de serrage (213) tire la bande de matériau de rechange sur le rouleau de matériau de rechange (A), de manière à permettre à l'équipement de transport (10) de couper la bande de matériau de rechange à partir d'une position de coupe entre le rouleau de matériau de rechange (A) et la position de traction.

18. L'équipement de remplacement de rouleaux selon la revendication 17, **caractérisé en ce que** le mécanisme de prise (21) comprend en outre un ensemble de détection (2121) monté sur le sixième support mobile (211), et l'ensemble de soufflage (212) est monté sur l'ensemble de détection (2121) ;
lors du déplacement du sixième support mobile (211) depuis la position de traction vers le rouleau de matériau de rechange (A), l'ensemble de détection (2121) est destiné à détecter si l'ensemble de soufflage (212) est en butée contre le rouleau de matériau de rechange (A) sur l'équipement de transport (10).

19. L'équipement de remplacement de rouleaux selon la revendication 17, **caractérisé en ce que** l'équipement de prise (20) comprend en outre un mécanisme de récupération de déchets (22) ; le mécanisme de récupération de déchets (22) comprend un cinquième support mobile (221) et un arbre de récupération de matériau (222) ; une extrémité de l'arbre de récupération de matériau (222) est disposée sur le cinquième support mobile (221), et l'arbre de récupération de matériau (222) est rotatif par rapport au cinquième support mobile (221) autour de son propre axe ; l'arbre de récupération de matériau (222) comporte une rainure de fourchette de matériau (k1) s'étendant axialement, et la rainure de fourchette de matériau (k1) traverse l'extrémité de l'arbre de récupération de matériau (222) éloignée un extrémité du cinquième support mobile (221) ;
le cinquième support mobile (221) est mobile le long d'une troisième direction prédéfinie, de manière à entraîner l'arbre de récupération de matériau (222) à atteindre ou à quitter une position de bobinage, ladite position de bobinage étant située entre la position de traction et la position de coupe ;
lorsque le cinquième support mobile (221) entraîne l'arbre de récupération de matériau (222) à se déplacer vers la position de bobinage, la bande de matériau de rechange tirée par l'ensemble de serrage (213) peut entrer dans la rainure de fourchette de matériau (k1).

20. L'équipement de remplacement de rouleaux selon la revendication 19, **caractérisé en ce que** le mécanisme de récupération de déchets (22) comprend en outre un ensemble de déplacement de matériau disposé correspondant à la position de bobinage ; l'ensemble de déplacement de matériau comprend un élément d'entraînement de déplacement de matériau (2271) et un élément de déplacement de matériau (2272) monté sur l'extrémité d'entraînement de l'élément d'entraînement de déplacement de matériau (2271) ;
lorsque l'arbre de récupération de matériau (222) est dans la position de bobinage, l'élément d'entraînement de déplacement de matériau (2271) peut entraîner l'élément de déplacement de matériau (2272) à s'insérer depuis l'extrémité de la rainure de fourchette de matériau (k1) proche du cinquième support mobile (221).

21. L'équipement de remplacement de rouleaux selon la revendication 1, **caractérisé en ce que** ledit équipement de remplacement de rouleaux comprend en outre un équipement de préparation de matériau ; ledit équipement de préparation de matériau comprend un mécanisme de préparation de matériau (50) disposé correspondant au poste de prise ; le mécanisme de préparation de matériau (50) comprend un support fixe (51), un arbre de préparation de matériau (52), un premier ensemble de serrage (54) et un deuxième ensemble de serrage (55) ;
l'arbre de préparation de matériau (52) comporte, à ses extrémités axiales, une extrémité de connexion (521) et une extrémité de chargement (522) ; l'arbre de préparation de matériau (52) est relié au support fixe (51) par l'intermédiaire de l'extrémité de connexion (521) ; le premier ensemble de serrage (54) est monté sur le support fixe (51), de manière à serrer ou à desserrer un tube de chargement enfilé sur l'arbre de préparation de matériau (52) au niveau de l'extrémité de connexion (521) ; le tube de chargement est destiné à charger une pluralité de rouleaux de matériau de rechange (A) ; le deuxième ensemble de serrage (55) est mobile par rapport au support fixe (51) le long de la direction axiale de l'arbre de préparation de matériau (52), de manière à pousser le rouleau de matériau de rechange (A) chargé sur le tube de chargement sur l'équipement de transport (10) depuis l'extrémité de chargement (522).

22. L'équipement de remplacement de rouleaux selon la revendication 21, **caractérisé en ce que** l'équipement de préparation de matériau comprend en outre un mécanisme de chargement ; ledit mécanisme de chargement comporte un arbre de chargement, et l'arbre de chargement est destiné à enfiler le tube de chargement chargé d'une pluralité de rouleaux de matériau de rechange (A) ;
lorsque le mécanisme de chargement se déplace jusqu'au poste de prise, l'arbre de chargement est en butée axialement avec l'extrémité de chargement (522) de l'arbre de préparation de matériau (52) ; le deuxième ensemble de serrage (55) est en outre destiné à serrer le tube de chargement sur l'arbre de chargement et à entraîner le tube de chargement à se déplacer vers l'extrémité de connexion (521).
